# EUROPEAN PATENT SPECIFICATION

(11) **EP 2 540 597 B1**
(45) Date of publication and mention of the grant of the patent: **21.02.2018**
(21) Application number: 12170586.7
(22) Date of filing: 01.06.2012
(51) Int. Cl.: B62D 25/08, B62D 25/12

(54) **Front vehicle body structure with reinforced area for the mounting of hood hinges**
Vorderteilkonstruktion einer Fahrzeugkarosserie mit verstärktem Bereiche zum Anbau von Motorhaubescharniere
Structure de carrosserie frontale d'un véhicule présentant des zones renforcées de montage des charnières du capot

(30) Priority: 29.06.2011 JP 2011144062; 29.06.2011 JP 2011143780; 29.06.2011 JP 2011143714
(43) Date of publication of application: 02.01.2013
(73) Proprietor: Honda Motor Co., Ltd., Tokyo 107-8556 (JP)
(72) Inventor: Matsuoka, Kiyohiko, Saitama, 351-0193 (JP); Ichikawa, Shuji, Saitama, 351-0193 (JP); Kawatsu, Raika, Saitama, 351-0193 (JP); Kominamidate, Masami, Saitama, 351-0193 (JP)
(74) Representative: Weickmann & Weickmann PartmbB

(56) References cited:
- JP-A- 2009 029 202
- JP-A- 2010 023 661
- US-A1- 2003 089 545

## Description

The present invention relates to front vehicle body structures in which a cowl box is provided behind or rearwardly, in a front-rear direction of the vehicle body, of damper housings, a windshield is supported by the cowl box, and left and right front pillars are provided rearwardly of the cowl box.

Among the conventionally-known front vehicle body structures is one according the preamble of claim 1 and disclosed in Japanese Patent Application Laid-open Publication No. 2010-23661 (hereinafter referred to as "patent literature 1"), in which a cowl box is provided on an upper section of a dashboard's lower member partitioning between an engine room and a passenger compartment and in which hood hinges are provided on hood hinge stiffeners extending forward (i.e., toward the front of the vehicle body or in a forward direction of the vehicle body) from a cowl box. Each of the hood hinge stiffeners is mounted to an upper member via a dashboard's side member, and a hood (bonnet) is mounted on the hood hinges provided on the hood hinge stiffeners. In this manner, the hood is supported on the hood hinge stiffeners (i.e., on the vehicle body) via the hood hinges.

Because each of the hood hinge stiffeners is mounted to the upper member via the dashboard's side member, the front vehicle body structure disclosed in patent literature 1 requires two separate component parts, i.e. the hood hinge stiffener and the dashboard's side member for supporting the hood hinge on the vehicle body. Thus, with the front vehicle body structure disclosed in patent literature 1, the number of necessary component parts would undesirably increase. Further, because an air conditioning air inlet is formed in the cowl box for introducing external or outside sir into an air conditioning device (air conditioner) in the front vehicle body structure disclosed in patent literature 1, there has been a need for providing some arrangement for preventing vehicle washing water etc. from entering the air conditioning air inlet.

Further, in the front vehicle body structure disclosed in patent literature 1, a fender bracket is bent upward from each of dashboard's side members, and a side fender is supported by the fender bracket. It is preferable that a load input from the front of the vehicle body be efficiently transmitted to each front pillar. Thus, there has been a need for some arrangement for efficiently transmitting the input load to each front pillar via the cowl box. Furthermore, in mounting the side fender to the corresponding fender bracket, a relatively great load would be input from above, and thus, it is necessary to secure a sufficient rigidity of the fender bracket against deformation.

Also known is a front vehicle body structure disclosed in Japanese Patent No. 4,060,253 (hereinafter referred to as "patent literature 2"), in which a cowl box is provided on an upper end section of a dashboard's lower member partitioning between an engine room and a passenger compartment and in which the cowl box is disposed rearwardly and upwardly of damper housings. The cowl box, disposed rearwardly and upwardly of damper housings, has a bottom section located at generally the same height as upper end sections of the damper housings.

With the front vehicle body structure disclosed in patent literature 2, where the cowl box's bottom section is located at generally the same height as the upper end sections of the damper housings, a load input from the front of the vehicle body can be transmitted to the cowl box's bottom section via the upper end sections of the damper housings. Thus, the load input from the front of the vehicle body can be transmitted to front pillars via the cowl box's bottom section so that it can be borne by the front pillars.

There has also been known a front vehicle body structure in which the cowl box is disposed rearwardly of the damper housings and at generally the same height as the damper housings, and in which the cowl box's bottom section is located lower than the upper end sections of the damper housings. Thus, it is difficult for a load, input from the front of the vehicle body, to be efficiently transmitted to the cowl box's bottom section via the upper end sections of the damper housings.

In view of the foregoing prior art problems, it is an object of the present invention to provide an improved front vehicle body structure which can reduce the number of necessary component parts and can reliably prevent vehicle washing water etc. from entering the air conditioning air inlet.

It is another object of the present invention to provide an improved front vehicle body structure which can efficiently transmit a load, input from the front of the vehicle body, to the front pillars via the cowl box but also secure a sufficient rigidity of the fender brackets.

It is still another object of the present invention to provide an improved front vehicle body structure which can efficiently transmit a load, input from the front of the vehicle body, to the cowl box via the damper housings.

In order to accomplish the above-mentioned objects, the present invention provides an improved front vehicle body structure, which includes: a cowl box provided on an upper section of a dashboard's lower member partitioning between an engine room and a passenger compartment; left and right damper housings provided forwardly of the cowl box; left and right side extensions provided adjacent to the left and right damper housings and closing left and right end portions of the cowl box; left and right dashboard's side members mounted to the left and right side extensions and the left and right damper housings; and left and right front pillars connected to rear end portions of corresponding ones of the left and right side extensions, wherein each of the left and right side extensions includes a side wall section covering a corresponding one of the left and right end portions of the cowl box, and an upper bent section bent from an upper end portion of the side wall section toward the upper surface of the corresponding end portion of the cowl box, the side extension having a substantially hook shape defined with the side wall section and the upper bent section, and characterized in that each of the left and right dashboard's side members includes: a first horizontal section mounted to the underside of the upper bent section of a corresponding one of the left and right side extensions; a ridge line portion (side-member's ridge line portion) formed integrally or continuously with and forwardly of the first horizontal section, the ridge line portion having a first projection provided on an inner end portion, in a vehicle width direction, of the ridge line portion and projecting upwardly; and a wall portion (side-member's wall portion) extending downward from a front end portion of the ridge line portion and located inwardly, in a vehicle width direction, of the side wall section of the corresponding side extension.

According to the front vehicle body structure of the present invention, each of the left and right end portions of the cowl box is covered or closed with the side extension, and the dashboard's side member is mounted to the side extension and the damper housing. Thus, in each of the left and right end portions of the cowl box, a closed space is defined with the side extension and the dashboard's side member. In this way, the rigidity of each of the end portions of the cowl box can be increased, so that a load input at the time of a frontal collision, particularly an offset collision, can be efficiently transmitted rearwardly, i.e. toward the rear of the vehicle body.

Further, the side-member's ridge line portion is formed integrally with and forwardly of the front end of the first horizontal section, and the side-member's wall portion extends downward from the front end portion of the side-member's ridge line portion. Namely, the side-member's ridge line portion is formed in a substantially curved sectional shape by being provided in an intersecting part between the first horizontal section and the side-member's wall portion. Thus, the provision of the side-member's ridge line portion between the first horizontal section and the side-member's wall portion can even further increase the rigidity of the cowl box.

Further, the upper bent section of each of the left and right side extensions is fixedly mounted to the left or right end portion of the cowl box. Thus, the upper bent section can be reinforced with the end portion of the cowl box. In this way, the rigidity of the side extension can be increased, so that a side fender can be firmly supported by the rigidity-increased side extension.

Furthermore, the first projection is bent upward from the inner end portion of the side-member's ridge line portion, so that a space between the side-member's ridge line portion and an upper portion of the cowl box can be closed with the first projection. In this way, vehicle washing water etc. can be prevented by the first projection from entering the cowl box through the space between the side-member's ridge line portion and the upper portion of the cowl box.

In addition, the dashboard's side member is mounted to the side extension and the damper housing, and the dashboard's side member includes a hood hinge on which a hood (bonnet) is mounted for vertical opening and closing pivoting movement. Thus, the dashboard's side member supporting the hood hinge can comprise a single component part. As a result, the present invention can reduce the number of necessary component parts.

Preferably, in the front vehicle body structure of the present invention, the wall portion of each of the left and right dashboard's side members has a second projection provided on an inner end portion thereof and projecting in a forward direction of the vehicle body. Thus, when the vehicle washing water etc. has been directed inwardly, in the vehicle width direction, along the side-member's wall portion, it can be effectively blocked by the second projection. In this way, the vehicle washing water etc. can be prevented from entering the cowl box along the side-member's wall portion.

Preferably, in the front vehicle body structure of the present invention, the ridge line portion (side-member's ridge line portion) of each of the left and right dashboard's side members has a ridge-line reinforcing bead provided adjacent to an inner end portion thereof and outwardly, in the vehicle width direction, of the first projection and extending in a front-rear direction of the vehicle body. The ridge-line reinforcing bead, extending in the front-rear direction of the vehicle body, can close the space between the side-member's ridge line portion and the upper portion of the cowl box and thereby prevent vehicle washing water etc. from entering the cowl box through the space between the side-member's ridge line portion and the upper portion of the cowl box.

Further, the provision of the ridge-line reinforcing bead on the side-member's ridge line portion can increase the rigidity of the side-member's ridge line portion and thereby increase the rigidity of each of the end portions of the cowl box. Thus, the upper bent section of each of the side extensions can be even further reinforced by the corresponding end portion of the cowl box. In this way, the corresponding side fender can be supported even more firmly by the upper bent section of the side extension. In addition, a load input at the time of a frontal collision, particularly an offset collision, can be efficiently transmitted rearwardly or toward the rear of the vehicle body.

Further, preferably, in the front vehicle body structure of the present invention, each of the left and right dashboard's side members includes a second horizontal section extending from a lower end portion of the side member's wall portion in the forward direction of the vehicle body and joined or mounted to a corresponding one of the left and right damper housings, and a side-member's joint part projecting upward from an outer end portion of the second horizontal section and mounted to the inner surface of the side wall section of the corresponding side extension. Thus, the dashboard's side member can be supported by the corresponding damper housing and side wall section of the side extension, so that a sufficient rigidity of the dashboard's side member can be secured. In this way, a load input via the damper housing can be efficiently transmitted to the cowl box by way of the dashboard's side member.

Further, preferably, in the front vehicle body structure of the present invention, each of the left and right dashboard's side members has a recess formed in an intersecting part between the side-member's wall portion and the side-member's joint part of a corresponding one of the left and right dashboard's side members. When the dashboard's side member is press-formed of a flat plate, it is necessary to form or draw the intersecting part between the side-member's wall portion and the side-member's joint part into an angular shape. Thus, unwanted creases can be produced in the intersecting part between the side-member's wall portion and the side-member's joint part.

Further, preferably, in the front vehicle body structure of the present invention, the side-member's joint part mounted to the inner surface of the side wall section of the corresponding side extension and the first horizontal section mounted the underside of the upper bent section of the corresponding side extension are disposed substantially on an extension of a corresponding one of the left and right front pillars. Further, because the side-member's joint part is mounted to the inner surface of the side wall section of the side extension and the first horizontal section is mounted to the underside of the upper bent section of the side extension, a load input from the front of the vehicle body can be transmitted efficiently to the front pillar via the side-member's joint part and the first horizontal section.

Further, preferably, in the front vehicle body structure of the present invention, the cowl box comprises a dashboard's upper member extending in the front-rear direction of the vehicle body from the upper section of the dashboard's lower member, a windshield's lower member mounted to the dashboard's upper member and supporting a windshield glass, and left and right damper housing supports each disposed inwardly, in the vehicle width direction, and rearwardly of a corresponding one of the left and right damper housings and spanning between the dashboard's upper member and the windshield's lower member. Each of the damper housing supports is disposed inwardly and rearwardly of the corresponding damper housing, and thus, even in the case where a bottom section of the cowl box is located lower than an upper end section of the damper housing, a load input to the damper housing can be efficiently transmitted to the damper housing support (and hence the cowl box). In this way, the load transmitted to the damper housing support (cowl box) is transmitted via the cowl box to the front pillar and absorbed by the front pillar.

Further, preferably, in the front vehicle body structure of the present invention, each of the left and right damper housing supports includes a beam section disposed between the dashboard's upper member and the windshield's lower member, a support's front end portion extending from the front end of the beam section and mounted to a dashboard's upper ridge line portion of the dashboard's upper member, and a support's rear end portion extending from the rear end of the beam section and mounted to a windshield's upper ridge line portion of the windshield's lower member, and the beam section has an upper side portion formed in a shape slanting obliquely upwardly toward the rear of the vehicle body. The dashboard's upper ridge line portion and the windshield's upper ridge line portion each have a relatively great rigidity by being formed in a substantially curved sectional shape. Thus, a load transmitted from the damper housing to the dashboard's upper ridge line portion can be efficiently transmitted to the damper housing support via the dashboard's upper ridge line portion. Further, the load transmitted to the damper housing support can be efficiently transmitted to the front pillar via the windshield's upper ridge line portion. Further, because the upper side portion of the damper housing support (beam section) is formed in a shape slanting obliquely upwardly toward the rear of the vehicle body, the load transmitted from the damper housing to the damper housing support can be transmitted efficiently to the front pillar via the damper housing support.

Further, preferably, in the front vehicle body structure of the present invention, the dashboard's upper member has a substantially U shape, as viewed in side elevation, defined with a front dashboard wall, a rear dashboard wall disposed rearwardly of the front dashboard wall and a bottom section interconnecting respective lower end portions of the front dashboard wall and the rear dashboard wall, the dashboard's upper member including a dashboard's rear joint part provided on an upper end portion thereof, and the windshield's lower member includes a windshield's joint part provided on a lower end portion thereof and mounted to the dashboard's rear joint part, each of the left and right damper housing supports includes a joint projection projecting rearwardly from the support's rear end portion, and the joint projection is sandwiched between the dashboard's rear joint part and the windshield's joint part. Thus, the dashboard's upper member and the windshield's lower member can be reinforced by the damper housing support, so that the rigidity of the cowl box can be even further increased. Further, even through the damper housing support is disposed in an upward slanting shape extending obliquely upwardly and rearwardly, the damper housing support can be prevented from undesirably floating upwardly due to an impact load. Thus, a load transmitted from the damper housing to the damper housing support (namely, cowl box) can be efficiently transmitted to the front pillar via the cowl box.

Further, preferably, in the front vehicle body structure of the present invention, the support's front end portion in each of the left and right damper housing supports is bent inwardly in the vehicle width direction while the support's rear end portion is bent outwardly, in the vehicle width direction, toward the corresponding front pillar, and each of the damper housing supports includes a beam reinforcing bead provided on the beam section and extending in the front-rear direction of the vehicle body, a front reinforcing bead provided on the support's front end portion and extending inwardly, in the vehicle width direction, from the front end of the beam reinforcing bead, and a rear reinforcing bead provided on the support's rear end portion and extending outwardly, in the vehicle width direction, from the rear end of the beam reinforcing bead. Thus, the rigidity (section modulus) of the damper housing support can be increased by the beam reinforcing bead, front reinforcing bead and rear reinforcing bead. Thus, a load transmitted from the damper housing to the support's front end portion can be efficiently transmitted to the support's rear end portion via the support's beam section. Further, because the support's rear end portion is bent outwardly, in the vehicle width direction, toward the left front pillar, the load transmitted to the support's rear end portion from the support's beam section can be efficiently transmitted to the front pillar via the support's rear end portion.

Further, preferably, in the front vehicle body structure of the present invention, the front dashboard wall, a rear wall of the windshield's lower member, the side extension and the damper housing support are disposed in a substantially rectangular configuration as viewed in plan. Such an arrangement can even further increase the rigidity of the cowl box, so that a load transmitted to the cowl box can be transmitted efficiently to the front pillar via the cowl box.

Further, preferably, in the front vehicle body structure of the present invention, the windshield's lower member has an air conditioning air inlet for sucking outside air into the passenger compartment, and the damper housing support is disposed outwardly, in the vehicle width direction, of the air conditioning air inlet. In addition, the damper housing support's front end portion is mounted to the dashboard's upper ridge line portion while the damper housing support's rear end portion is mounted to the windshield's upper ridge line portion. With such arrangements, the present invention can prevent, by means of the damper housing support, vehicle washing water from flowing into the air conditioning air inlet. Further, with the damper housing support provided outwardly, in the vehicle width direction, of the air conditioning air inlet, it can be disposed near the air conditioning air inlet. Thus, the air conditioning air inlet can be reinforced with the damper housing support. In this way, the rigidity of the cowl box can be increased in such a manner as to effectively minimize or suppress vibration of the vehicle body caused by vibration of the engine etc. In addition, because the air conditioning air inlet is located outwardly, in the vehicle width direction, of the air conditioning air inlet, outside air sucked into the cowl box can be smoothly directed by the damper housing support toward the air conditioning air inlet, so that the outside air can be efficiently sucked into the air conditioning air inlet.

Further, preferably, the front vehicle body structure of the present invention further includes left and right upper members extending slanting downward from the left and right end portions of the cowl box toward the front of the vehicle body, left and right fender brackets each mounted to the outer surface of a corresponding one of the left and right side extensions and located rearwardly of a corresponding one of the left and right dashboard side members, and left and right side fenders mounted to the left and right fender brackets from outside the vehicle body. Because each of the left and right fender brackets is mounted to the outer surface of the corresponding side extension, the side extension can have an increased rigidity by being reinforced with the fender bracket. Further, because the fender bracket is located rearwardly of the dashboard's side member, the fender bracket can prevent the side extension from deforming outwardly in the vehicle width direction by the dashboard's side member being pushed by a load, input from the front of the vehicle body, toward the rear of the vehicle body. Each of the front pillars is disposed rearwardly of the corresponding side extension. The side extension and the dashboard's side member can together even further increase the rigidity of the side extension. In this way, a load input from the front of the vehicle body can be transmitted efficiently to the front pillar via the side extension.

Further, preferably, in the front vehicle body structure of the present invention, each of the fender brackets includes a bracket's mounting portion mounted to the corresponding side extension, a bracket's upper end portion disposed above the bracket's mounting portion and the corresponding side extension for supporting a corresponding one of the left and right side fenders, and a bracket's ridge line portion formed in an intersecting part between the bracket's upper end portion and the bracket's mounting portion in such a manner that the bracket's mounting portion extends continuously with the bracket's mounting portion and the bracket's upper end portion, and the bracket's mounting portion, the bracket's upper end portion and the bracket's ridge line portion together constitute a substantially hook shape, the fender bracket further including a bracket's bead provided thereon and extending vertically on and along the bracket's ridge line portion. With the bracket's bead formed on the bracket's ridge line portion, a sufficient rigidity of the fender bracket can be secured. Thus, when the side fender is to be mounted to the fender bracket, a load input from above can be efficiently borne by the fender bracket. Further, with the bracket's bead formed on the bracket's ridge line portion, mounting accuracy of the side fender can be enhanced with the bracket's bead formed on the bracket's ridge line portion. Thus, the side fender can be positioned substantially in flush with the hood (bonnet) adjoining the side fender, so that it is possible to secure a desired external fitting accuracy (i.e., mounting accuracy as viewed from outside the vehicle) of the side fender and hood.

Further, preferably, the front vehicle body structure of the present invention further includes left and right partition pads each supported by a corresponding one of the left and right fender brackets for partitioning the inner surface of the corresponding side fender, each of the side fenders includes a fender body covering the corresponding fender bracket from outside the vehicle body and having the left or right partition pad provided on the inner surface thereof, a vertical section extending downward from an upper end portion of the fender body, and a fender mounting section projecting inwardly, in the vehicle width direction, from a lower end portion of the vertical section. In addition, each of the left and right partition pads includes a vertical surface opposed to the outer surface of the vertical section, and a restricting bead extending vertically for fitting engagement with the bracket's bead of the corresponding fender bracket. With the restricting bead fittingly engaging with the bracket's bead, the partition pad can be accurately positioned at a predetermined position. Further, because the restricting bead fittingly engaging with the bracket's bead allows the side fender to be accurately positioned at a predetermined position, mounting operation of the side fender can be facilitated.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a perspective view showing an embodiment of a front vehicle body structure of the present invention;
Fig. 2 is an enlarged perspective view of a section encircled at "2" in Fig. 1 with a left side fender detached from a vehicle body;
Fig. 3 is an enlarged, exploded perspective view of the section encircled at "2" in Fig. 1;
Fig. 4 is a perspective view taken in the direction of arrow 4 of Fig. 2;
Fig. 5A is a sectional view taken along line 5A - 5A of Fig. 4, and Fig. 5B is an enlarged perspective view of a section encircled at "5B" in Fig. 5A;
Fig. 6 is a sectional view taken along line 6 - 6 of Fig. 1;
Fig. 7 is a perspective view taken in the direction of arrow 7 of Fig. 3;
Fig. 8 is a sectional view taken along line 8 - 8 of Fig. 2;
Fig. 9A is a rear perspective view of a damper housing support provided in the embodiment of the present invention, and Fig. 9B is a front perspective view of the damper housing support;
Fig. 10 is an enlarged perspective view of a section encircled at "10" in Fig. 2;
Fig. 11 is an enlarged perspective view of a section encircled at "11" in Fig. 3;
Fig. 12 is a perspective view taken in the direction of arrow 12 of Fig. 10;
Fig. 13 is a perspective view taken in the direction of arrow 13 of Fig. 10;
Fig. 14 is an enlarged, exploded perspective view of the front vehicle body structure shown in Fig. 13;
Fig. 15A is a sectional view taken along line 15A - 15A of Fig. 13, and Fig. 15B is a sectional view taken along line 15B - 15B of Fig. 13;
Fig. 16 is a perspective view showing the front vehicle body structure with the left side fender attached to a left side fender bracket;
Fig. 17 is an exploded view of the front vehicle body structure shown in Fig. 16;
Fig. 18 is a view showing how a load input from the front of the vehicle body is transmitted to a left damper housing;
Fig. 19 is a view showing an example manner in which the load is transmitted via a damper housing support to the left damper housing;
Fig. 20 is a view showing an example manner in which the load is transmitted via a left side extension to a left front pillar; and
Fig. 21 is a view showing an example manner in which water is prevented by a left dashboard's side member from entering a cowl box.

In the following description, the terms "front", "rear", "forward", "rearward", "left", "right", etc. are used to refer to directions as viewed from a human driver of a vehicle.

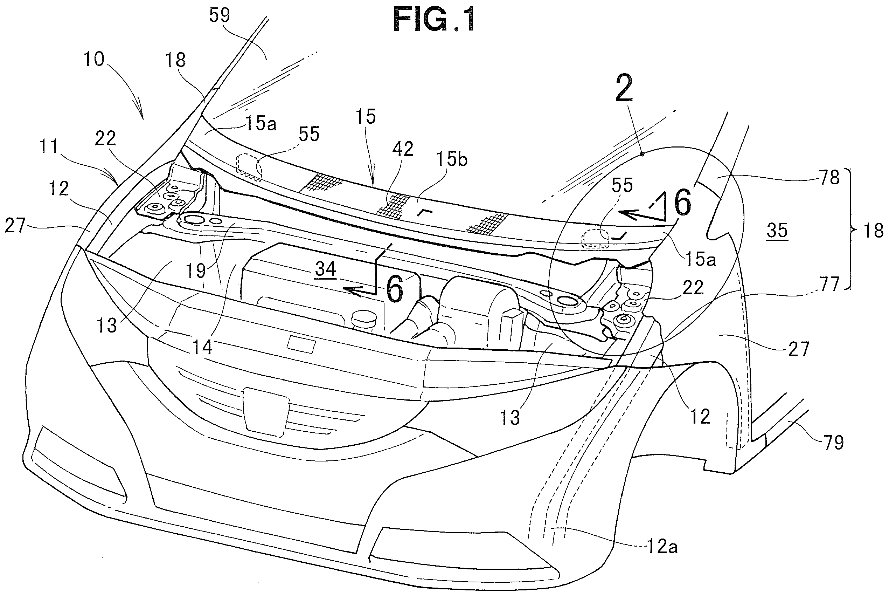

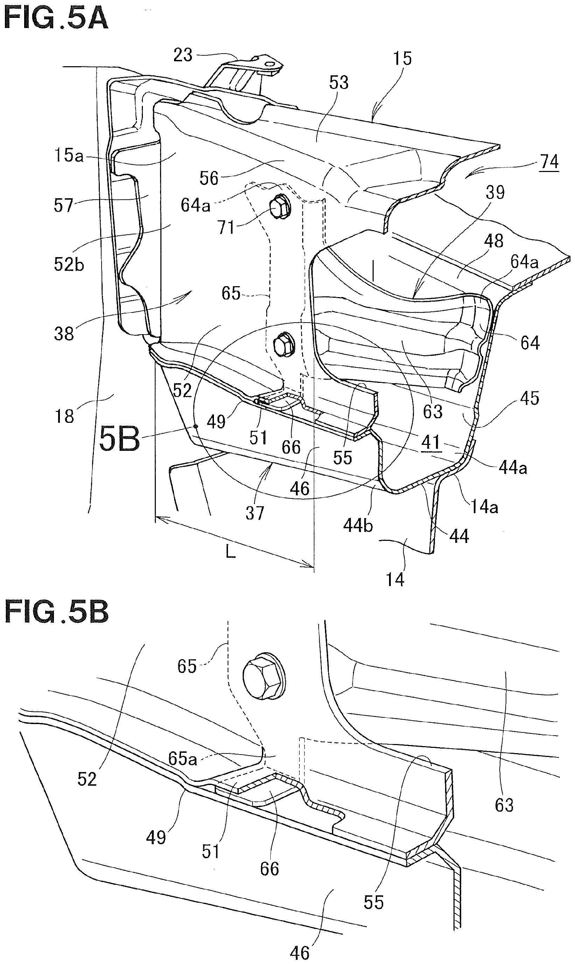

Reference is now made to Fig. 1 showing in perspective an embodiment of a front vehicle body structure 10 of the present invention. As shown, the front vehicle body structure 10 includes: left and right upper members 12 mounted to left and right side sections of a vehicle body; left and right damper housings 13 provided inwardly, in a width direction of the vehicle body (hereinafter also referred to as "vehicle width direction"), of the left and right upper members 12; a dashboard's lower member 14 provided rearwardly, in a front-rear direction of the vehicle body, of the left and right damper housings 13; a cowl box 15 provided on an upper section 14a (see Fig. 5) of the dashboard's lower member 14; and left and right front pillars 18 provided on left and right end portions 15a of the cowl box 15. A reinforcing tower bar 19 is connected at opposite ends to and extends between the left and right damper housings 13.

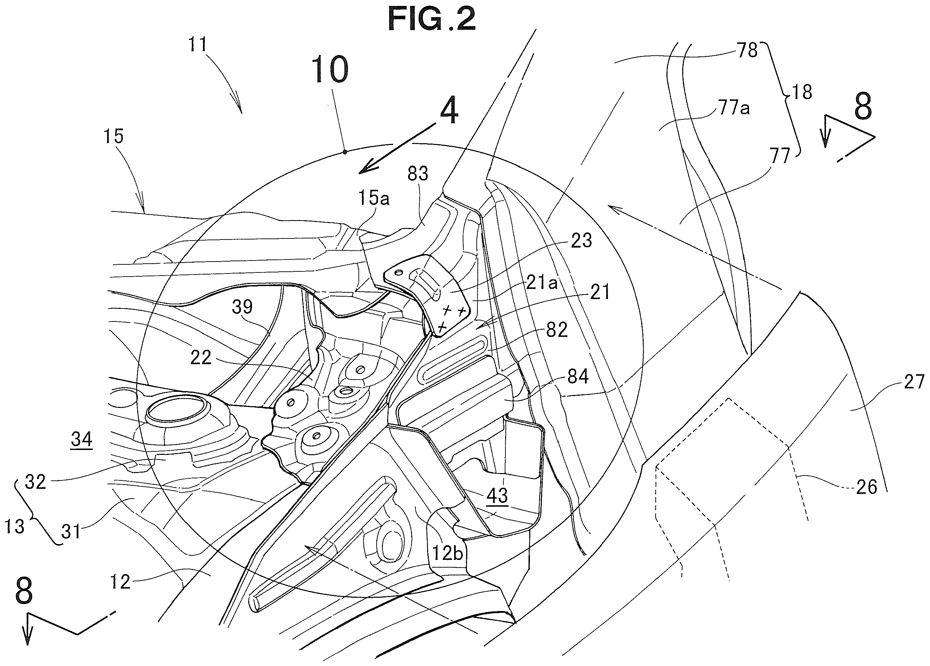

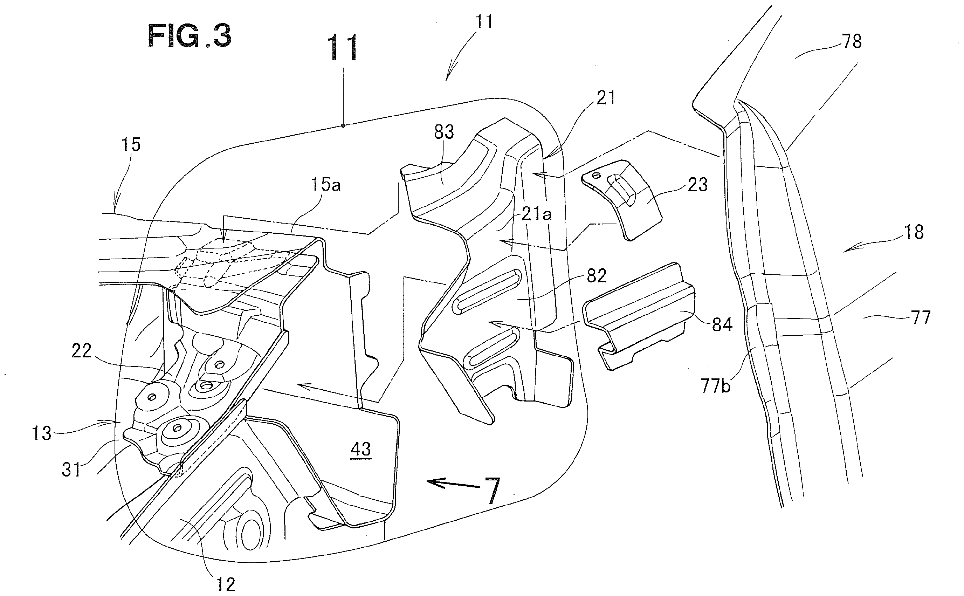

As shown in Figs. 2 and 3, the front vehicle body structure 10 includes: left and right side extensions 21 (only the left side extension 21 is shown) provided on left and right end portions 15a of the cowl box 15; left and right dashboard's side members 22 provided inwardly, in the vehicle width direction, of the left and right side extensions 21; and left and right fender brackets 23 (only the left fender bracket 23 is shown) connected to respective upper portions (upper outer surfaces) 21a of the left and right side extensions 21.

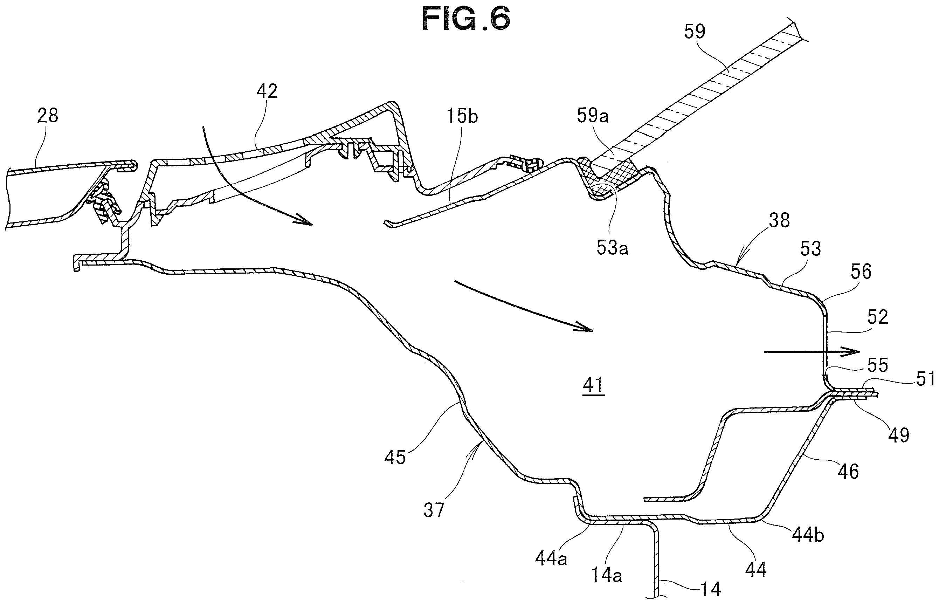

In addition, the front vehicle body structure 10 includes: left and right partition pads 26 (only the left partition pad 26 is shown) supported by the left and right fender brackets 23; left and right side fenders 27 having the left and right partition pads 26 mounted thereto; and a hood (bonnet) 28 (see Fig. 6) mounted between the left and right side fenders 27 for vertical opening and closing pivotal movement.

Because the front vehicle body structure 10 is constructed substantially in left-right symmetry, the same reference numerals and characters are attached to the left-side and right-side elements or component parts of the front vehicle body structure 10, and, in the following description, the left-side elements or component parts of the front vehicle body structure 10 will be primarily described. Therefore, it should be appreciated that the following description about the left-side component parts of the front vehicle body structure of the invention applies to the right-side component parts of the front vehicle body structure.

The left upper member 12 is provided on the left side section of the vehicle body and slants downward from the left end portion 15a of the cowl box 15 toward the front of the vehicle body. The upper member 12 is constructed in such a manner that, when a load has been input from the front of the vehicle body, for example, due to an offset collision, the input load is transmitted to its front end portion 12a (see Fig. 1). Note that the "offset collision" is a collision offset leftward or rightward from the centerline in the vehicle width direction.

The left damper housing 13 is disposed adjacent to and in front of the left end portion 15a of the cowl box 15. The left damper housing 13 includes a housing body 31 connected to the left upper member 12 and a left front side frame (not shown), and an upper end section 32 located upwardly of the housing body 31. The housing body 31 is a wall portion partitioning a left front damper (not shown) from an engine room 34. The housing's upper end section 32 is a member supporting an upper end portion of the left front damper.

As shown in Fig. 1, the dashboard's lower member 14 is a panel member disposed rearwardly, in the vehicle front-rear direction, of the left and right housings 13 and partitioning between the engine 34 and a passenger compartment 35. The cowl box 15 is provided on an upper section 14a of the dashboard's lower member 14.

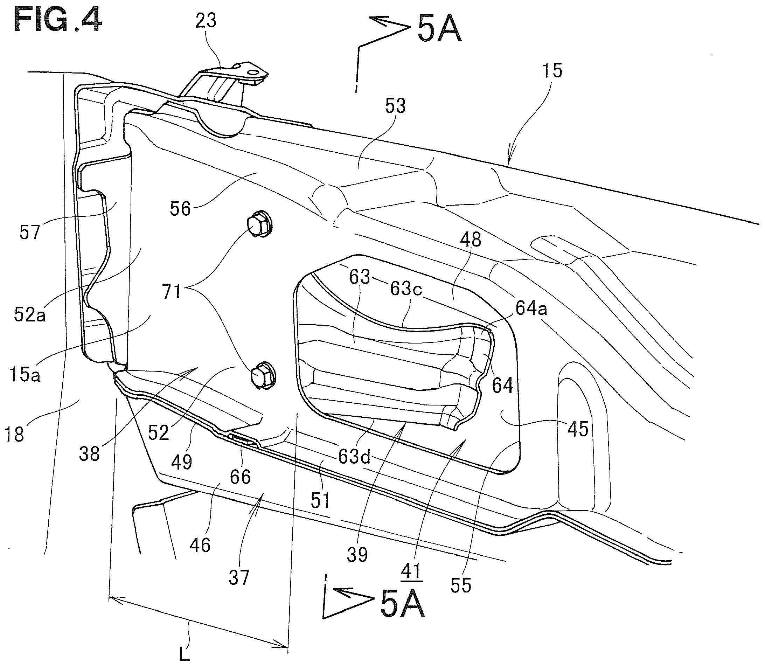

As shown in Figs. 4 and 5, the cowl box 15 includes; a dashboard's upper member 37 mounted on the upper section 14a of the dashboard's lower member 14; a windshield's lower member 38 connected to the dashboard's upper member 37; and a damper housing support 39 spanning between the dashboard's upper member 37 and the windshield's lower member 38.

As shown in Fig. 6, the cowl box 15 has a closed space 41 defined with the dashboard's upper member 37 and the windshield's lower member 38, and also has an outside air inlet 42 formed in an upper middle section 15b thereof. The cowl box 15 has a left end opening 43 (Fig. 2) formed in the left end portion 15a thereof.

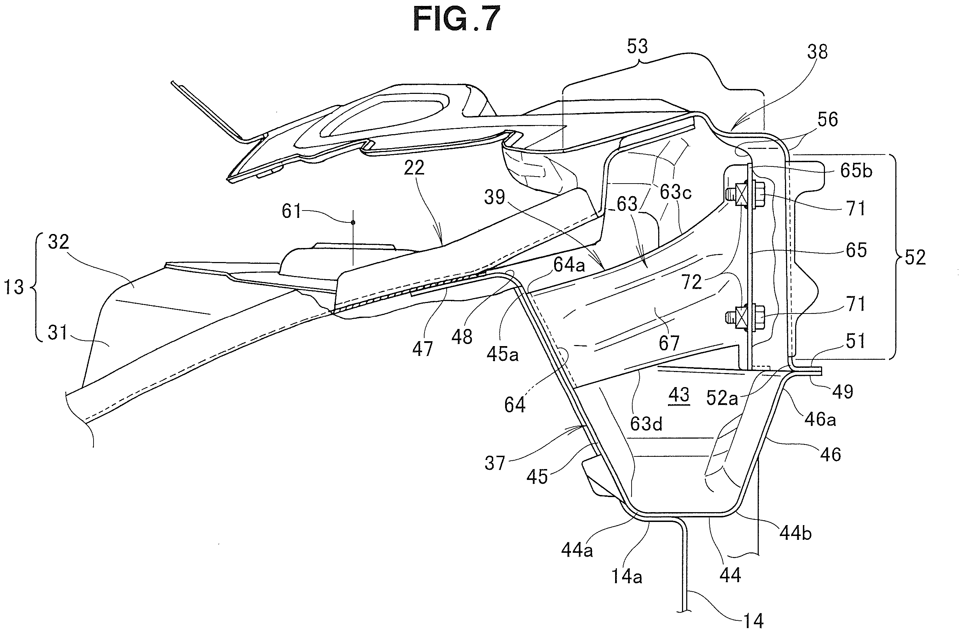

As shown in Fig. 7, the dashboard's upper member 37 includes a bottom section (dashboard's bottom section) 44 projecting in the front-rear direction of the vehicle body from the upper section 14a of the dashboard's lower member 14, a front dashboard wall (i.e., front wall of the dashboard's upper member 37) 45 bent upward from a front end portion 44a of the bottom section 44, and a rear dashboard wall 46 disposed rearwardly of the front dashboard wall 45 and bent upward from a rear end portion 44b of the bottom section 44. The bottom section 44 interconnects respective lower end portions of the front dashboard wall 45 and the rear dashboard wall 46. The dashboard's upper member 37 has a substantially U shape, as viewed in side elevation, defined with the front dashboard wall 45, rear dashboard wall 46 and bottom section 44.

The dashboard's upper member 37 further includes a front joint part 47 bent forward from an upper end portion 45a of the front dashboard wall 45, an upper ridge line portion 48 in an intersecting part between the front dashboard wall 45 and the front joint part 47, and a rear joint part 49 bent rearward (i.e., toward the rear of the vehicle body or in a rearward direction of the vehicle body) from an upper end portion 46a of the rear dashboard wall 46.

The windshield's lower member 38 includes a lower joint part 51 fixedly joined by welding to the dashboard's rear joint part 49, a rear windshield wall (i.e., rear wall of the windshield's lower member 38) bent upward from a front end portion of the lower joint part 51, and an upper end section 53 bent forward from an upper end portion of a rear windshield wall 52.

The lower joint part 51 is bent rearward from a lower end portion 52a of the rear windshield wall 52. The windshield's lower member 38 has a substantially L shape, as viewed in side elevation, defined with the rear windshield wall 52 and windshield's upper end section 53.

As shown in Figs. 4 and 5, the rear windshield wall 52 has an air conditioning air inlet 55 formed near a left end portion 52b thereof, i.e. at a predetermined interval L from the left end. The air conditioning air inlet 55 is in communication with an air conditioning device (not shown) via an air intake duct. Thus, external or outside air introduced into the cowl box 15 through the outside air inlet 42 is directed to the air conditioning air inlet 55 through the interior of the cowl box 15. Then, the outside air directed to the air conditioning air inlet 55 is directed to the air conditioning device via the air conditioning air inlet 55 and air intake duct, and then blown out into the passenger compartment 35 after having been conditioned by the air conditioning device.

As shown in Fig. 6, the windshield's upper end section 53 includes a glass support portion 53a supporting a lower end portion 59a of a windshield glass 59.

Further, as shown in Figs. 5A and 5B and Fig. 7, the windshield's lower member 38 has an upper ridge line portion (i.e., windshield's upper ridge line portion) 56 in an intersecting part between the rear windshield wall 52 and the windshield's upper end section 53, and a left joint part 57 bent rearward from the left end portion 52b of the rear windshield wall 52.

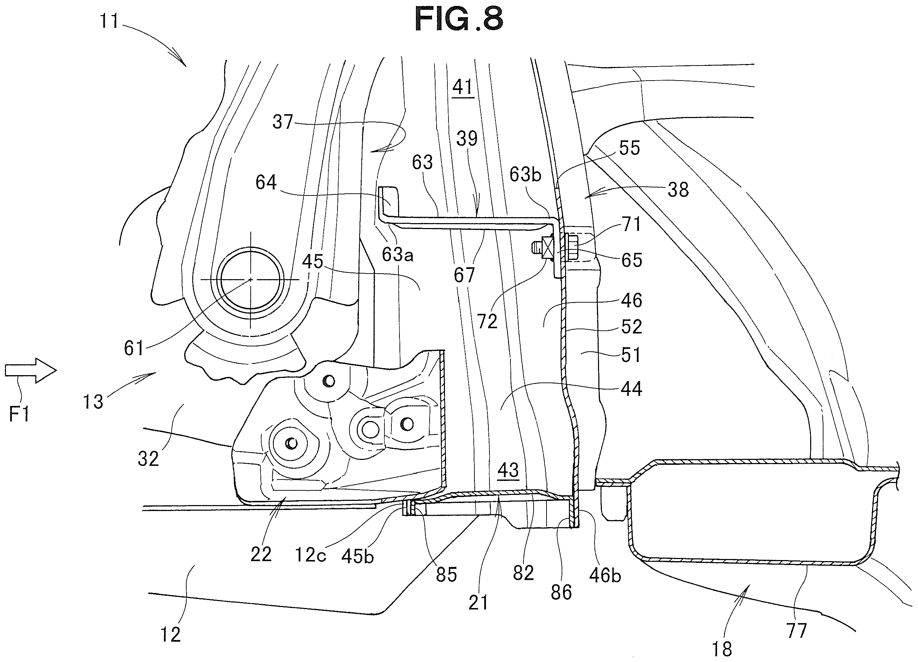

With the cowl box 15 provided behind the left damper housing 13, as shown in Figs. 7 and 8, the cowl box 15 is located at generally the same height as the left damper housing 13, and, thus, the cowl box's bottom section (dashboard's bottom section) 44 is located lower than the upper end section 32 of the left damper housing 13. Therefore, it would be difficult for a load, input from the front of the vehicle body, to efficiently transmit to a bottom section of the dashboard's bottom section by way of the upper end section 32 of the left damper housing 13. For this reason, the damper housing support 39 spans between the dashboard's upper member 37 and the windshield's lower member 38. Further, the damper housing support 39 is disposed inwardly, in the vehicle width direction, of the center 61 of the left damper housing 13 (upper end section 32 of the left damper housing 13) and behind or rearwardly of the left damper housing 13.

Thus, even in the case where the dashboard's bottom section is located lower than the upper end section 32 of the left damper housing 13 as noted previously, a load input to the left damper housing 13 can be efficiently transmitted to the damper housing support 39 (and hence the cowl box 15). In this way, the load transmitted to the damper housing support 39 (cowl box 15) is transmitted via the cowl box 15 to the left front pillar 18 (see also Fig. 2) and absorbed by the left front pillar 18.

Further, even when the left damper housing 13 has moved rearward due to moment produced by a load input to the left damper housing 13, the left damper housing 13 can be supported by the damper housing support 39 that spans between the dashboard's upper member 37 and the windshield's lower member 38 and that is disposed inwardly, in the vehicle width direction, of the center 61 of the left damper housing 13 (upper end section 32 of the left damper housing 13) and rearwardly of the left damper housing 13. In this way, the load applied to the damper housing support 39 (cowl box 15) can be transmitted to the left front pillar 18 (see also Fig. 2) via the cowl box 15 and absorbed by the left front pillar 18.

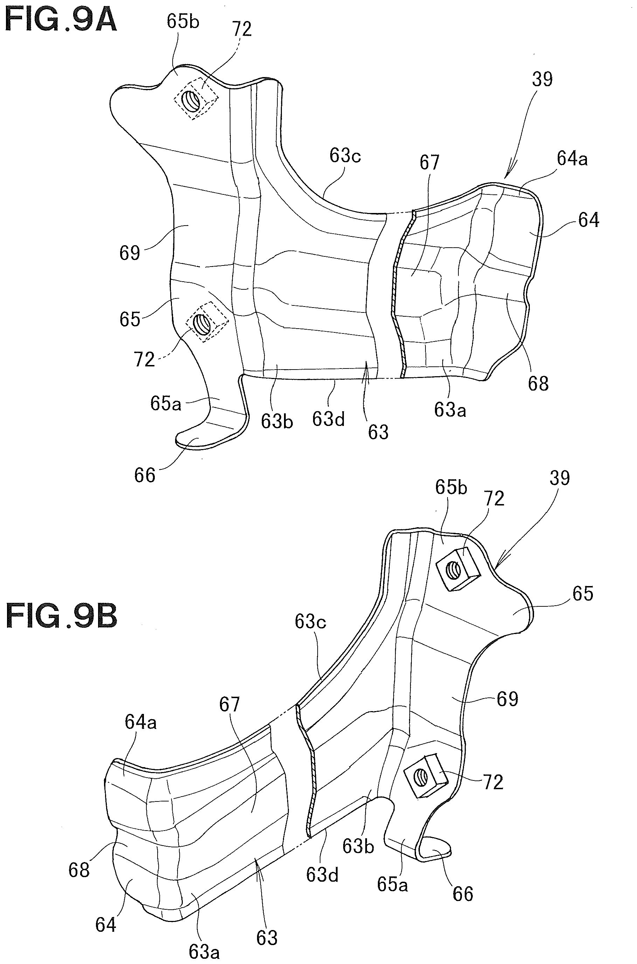

The following describe in greater detail the damper housing support 39. As shown in Fig. 9, the damper housing support 39 includes a beam section 63 disposed between the front dashboard wall 45 and the rear windshield wall 52, a support's front end portion 64 projecting from a front end portion 63a of the support's beam section 63, a support's rear end portion 65 projecting from a rear end portion 63b of the support's beam section 63, and a joint projection 66 projecting rearward from a lower end part 65a of the support's rear end portion 65.

The damper housing support 39 further includes a beam reinforcing bead 67 formed on the support's beam section 63, a front reinforcing bead 68 formed on the support's front end portion 64, and a rear reinforcing bead 69 formed on the support's rear end portion 65.

The support's beam section 63 has an upper curved portion (upper side portion) 63c formed in the shape slanting obliquely upwardly and rearwardly (toward the rear of the vehicle body) from the front end portion 63a to the rear end portion 63b of the support's beam section 63, and a lower slanting portion 63d slanting upwardly and rearwardly from the front end portion 63a to the rear end portion 63b. The reason why the upper curved portion 63c is formed in the shape slanting obliquely upwardly and rearwardly will be detailed later.

As shown in Figs. 8 and 9, the support's beam section 63 has the beam reinforcing bead 67 provided between the upper curved portion 63c and the lower slanting portion 63d. The beam reinforcing bead 67 bulges outwardly, in the vehicle width direction, of the support's beam section 63 and extends in the front-rear direction along the lower slanting portion 63d.

The support's front end portion 64 is bent inwardly, in the vehicle width direction, from the front end portion 63a of the support's beam section 63, and the front reinforcing bead 68 is formed on the support's front end portion 64. The front reinforcing bead 68 extends inwardly, in the vehicle width direction, from the front end of the beam reinforcing bead 67.

As shown in Figs. 5 and 7, the support's front end portion 64 is fixedly joined by welding to the front dashboard wall 45, and has its upper end part 64a disposed on the dashboard's upper ridge line portion 48.

As shown in Figs. 8 and 9, the support's rear end portion 65 is bent outwardly, in the vehicle width direction, from the rear end portion 63b of the support's beam section 63 toward the left front pillar 18. The rear reinforcing bead 69 is formed on the support's rear end portion 65 and extends outwardly, in the vehicle width direction, from the rear end of the beam reinforcing bead 67.

As shown in Figs. 5 and 7, the support's rear end portion 65 is fixedly fastened to the rear windshield wall 52 by means of bolts 71 and nuts 72 and has its upper end 65b disposed on the windshield's upper ridge line portion 56. The dashboard's upper ridge line portion 48 and the windshield's upper ridge line portion 56 each have a relatively great rigidity by being formed in a substantially curved cross-sectional shape. Further, the support's front end portion 64 is disposed on the dashboard's upper ridge line portion 48, and the support's rear end portion 65 is disposed on the windshield's upper ridge line portion 56. Thus, a load transmitted from the left damper housing 13 to the dashboard's upper ridge line portion 48 can be efficiently transmitted to the damper housing support 39 via the dashboard's upper ridge line portion 48. Further, the load transmitted to the damper housing support 39 can be efficiently transmitted to the left front pillar 18 (see also Fig. 2) via the windshield's upper ridge line portion 56.

The following describe the reason why the upper curved portion 63c of the damper housing support 39 is formed in an upward slanting shape extending obliquely upwardly and rearwardly. As shown in Fig. 7, the upper end section 32 of the left damper housing 13 is located lower than an upper end section of the cowl box 15 (i.e., windshield's upper end section 53). Thus, it would be difficult for a load, input to the left damper housing 13, to be efficiently transmitted to the windshield's upper ridge line portion 56.

Therefore, in the instant embodiment, the upper curved portion 63c of the damper housing support 39 (support's beam section 63) is formed in an upward slanting shape extending obliquely upwardly and rearwardly as noted previously. Thus, the front end portion 64 of the damper housing support 39 can be located at generally the same height as the housing's upper end section 32.

In this way, a load input to the left damper housing 13 (housing's upper end section 32) can be efficiently transmitted to the damper housing support 39. Further, the load transmitted to the damper housing support 39 can be efficiently transmitted to the left front pillar 18 (see also Fig. 2) via the damper housing support 39 and windshield's upper ridge line portion 56.

As shown in Figs. 8 and 9, the support's front end portion 64 is bent inwardly in the vehicle width direction, while the support's rear end portion 65 is bent outwardly in the vehicle width direction toward the left front pillar 18. Further, the support's beam section 63, support's front end portion 64 and support's rear end portion 65 have the beam reinforcing bead 67, front reinforcing bead 68 and rear reinforcing bead 69, respectively. In this manner, the rigidity (section modulus) of the damper housing support 39 can be increased by the beam reinforcing bead 67, front reinforcing bead 68 and rear reinforcing bead 69. Thus, a load transmitted from the left damper housing 13 to the support's front end portion 64 can be efficiently transmitted to the support's rear end portion 65 via the support's beam section 63.

Further, because the support's rear end portion 65 is bent outwardly, in the vehicle width direction, toward the left front pillar 18, the load transmitted to the support's rear end portion 65 from the support's beam section 63 can be efficiently transmitted to the left front pillar 18 via the support's rear end portion 65.

As shown in Figs. 5 and 9, the joint projection 66, projecting rearwardly from the lower end part 65a of the rear end portion 65, is sandwiched between the dashboard's rear joint part 49 and windshield's lower joint part 51. Thus, the dashboard's upper member 37 and the windshield's lower member 38 can be reinforced by the damper housing support 39, so that the rigidity of the cowl box 15 can be even further increased.

Further, even in the case where the damper housing support 39 is disposed in an upward slanting shape extending obliquely upwardly and rearwardly, the damper housing support 39 can be prevented from undesirably floating upwardly due to an impact load. Thus, a load transmitted from the damper housing 13 to the damper housing support 39 (namely, cowl box 15) can be efficiently transmitted to the left front pillar 18 via the cowl box 15.

As further shown in Figs. 4 and 5, the damper housing support 39 is disposed near and outwardly, in the vehicle width direction, of the air conditioning air inlet 55. The reason why the damper housing support 39 is disposed outwardly, in the vehicle width direction, of the air conditioning air inlet 55 is as follows. For example, during vehicle washing, vehicle washing water may undesirably enter the cowl box 15 through an upper opening 74 formed in the left end portion 15a of the cowl box 15 and flow into the air conditioning air inlet 55. This is why the damper housing support 39 is disposed outwardly, in the vehicle width direction, of the air conditioning air inlet 55 adjacent to the left end portion 15a.

In addition, the support's front end portion 64 (upper end part 64a) is disposed on the dashboard's upper ridge line portion 48, while the support's rear end portion 65 (upper end part 65b) is disposed on the windshield's upper ridge line portion 56. Thus, vehicle washing water having entered the cowl box 15 through the upper opening 74 of the cowl box 15 can be prevented by the damper housing support 39 from flowing into the air conditioning air inlet 55.

Further, because the damper housing support 39 is disposed near and outwardly, in the vehicle width direction, of the air conditioning air inlet 55, the air conditioning air inlet 55 can be reinforced by the damper housing support 39, so that the rigidity of the cowl box 15 can be increased in such a manner as to effectively suppress vibration of the vehicle body caused by vibration of the engine etc.

As further shown in Figs. 1 and 4, the outside air inlet 42 is provided in the upper middle section 15b of the cowl box 15, and thus, the outside air inlet 42 is located inwardly, in the vehicle width direction, of the air conditioning air inlet 55 while the air conditioning air inlet 55 is located outwardly, in the vehicle width direction, of the air conditioning air inlet 55. In this way, outside air sucked into the cowl box 15 through the outside air inlet 42 can be smoothly directed by the damper housing support 39 toward the air conditioning air inlet 55, so that the outside air can be efficiently sucked into the air conditioning air inlet 55.

As further shown in Figs. 1 and 2, the left front pillar 18 is mounted on the left end portion 15a of the cowl box 15, and the left front pillar 18 includes a leg section 77 and a slanting section 78. The pillar's leg section 77 extends vertically from a front end portion of a left side sill 79 (Fig. 1) to the left end portion 15a of the cowl box 15 (more specifically to the left side extension 21). The slanting section 78 extends obliquely upwardly and rearwardly from an upper end portion 77a of the leg section 77 along the left side edge of the windshield glass 59.

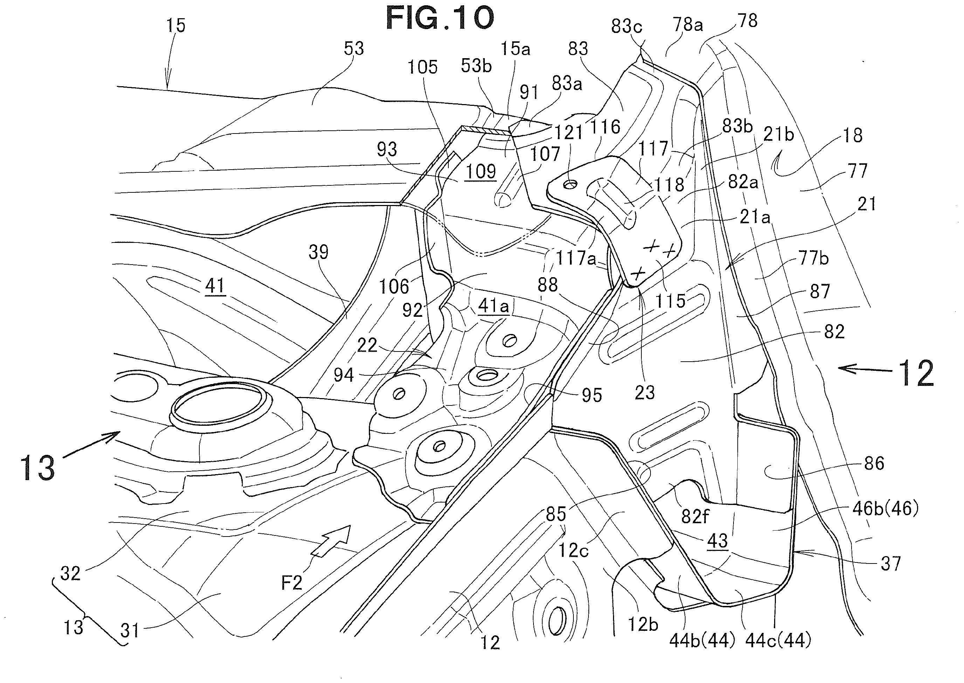

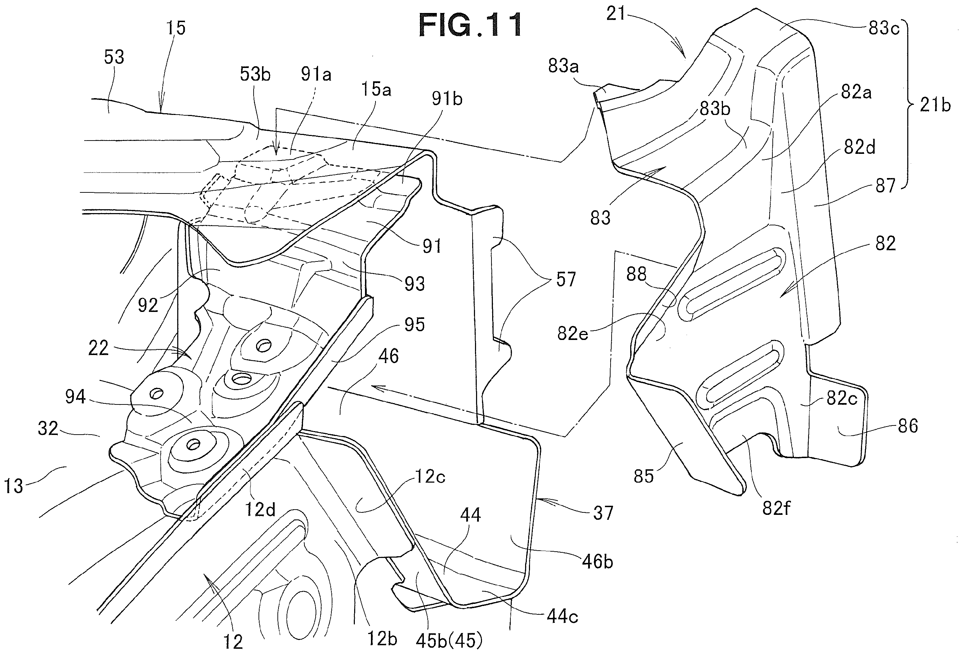

As shown in Figs. 10 and 11, the left side extension 21 is mounted on the left end portion 15a of the cowl box 15, and thus, the left end portion 15a of the cowl box 15 is closed (or covered) with the left side extension 21. The left side extension 21 mounted on the left end portion 15a of the cowl box 15 is located adjacent to and outwardly, in the vehicle width direction, of the left damper housing 13. The left end portion 15a of the cowl box 15 is connected with a rear end portion 12b of the left upper member 12.

Namely, the left side extension 21 includes a side wall section 82 covering the left end portion 15a of the cowl box 15 and reinforced by a reinforcing bracket 84 (see Figs. 2 and 3), and an upper bent section 83 bent upward from an upper end portion 82a of the extension's side wall section 82 toward the upper surface of the left end portion 15a of the cowl box 15. Thus, the left side extension 21 has a substantially hook shape (or inverted L shape) defined with the extension's side wall section 82 and upper bent section 83.

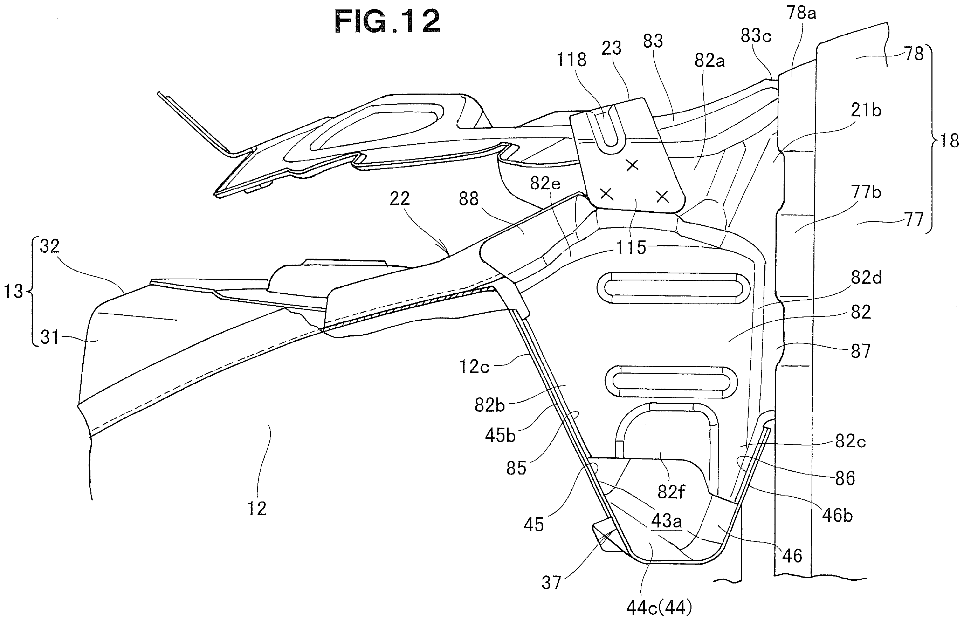

Further, as shown in Figs. 11 and 12, the left side extension 21 includes a front joint part 85 bent outwardly, in the vehicle width direction, from a front end portion 82b of the extension's side wall section 82, and a rear lower joint part 86 bent outwardly, in the vehicle width direction, from a rear lower end portion 82c of the extension's side wall section 82.

In addition, the left side extension 21 includes a rear joint part 87 protruding rearwardly from a rear end portion 82d of the extension's side wall section 82, and an upper front joint part 88 protruding upwardly from an upper front end portion 82e of the extension's side wall section 82.

The front joint part 85 of the extension's side wall section 82 is fixedly joined by welding to a left end portion 45b of the front dashboard wall 45 and to a rear joint part 12c of the left upper member 12, and the extension's rear lower joint part 86 is fixedly joined by welding to a left end portion 46b of the rear dashboard wall 46.

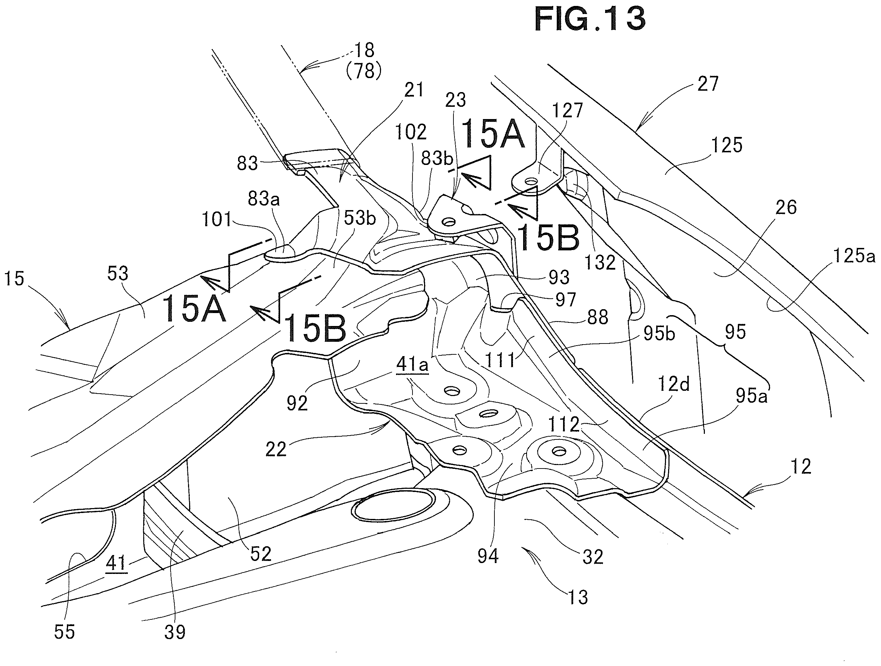

Further, the rear joint part 87 of the extension's side wall section 82 is sandwiched between, and fixedly joined by welding to, the windshield's left joint parts 57 and a joint part 77b of the pillar's leg section 77. In addition, the upper front joint part 88 of the extension's side wall section 82 is fixedly joined by welding to the left dashboard's side member 22 (rear half portion 95b of a side-member's joint part 95 (Fig. 13)).

Further, a joint end portion 83a of the extension's upper bent section 83 is fixedly joined by welding to a left end portion 53b of the windshield's upper end section 53 and the left dashboard's side member 22 (inner joint part 91a of a first horizontal section 91), and a joint portion 83b of the extension's upper bent section 83 is fixedly joined by welding to a left end portion 53b of the windshield's upper end section 53 and the left dashboard's side member 22 (outer joint part 91b of the first horizontal section 91). In addition, a rear end portion 83c of the extension's upper bent section 83 is fixedly joined by welding to a joint part 78a of the pillar's slanting section 78.

In the aforementioned manner, the left side extension 21 is fixedly joined by welding to the left end portion 15a of the cowl box 15, left upper member 12, left front pillar 18 and left dashboard's side member 22, so that the left end opening 43 of the cowl box 15 is closed (covered) with the extension's side wall section 82.

In the aforementioned state, a lower end portion 82f of the extension's side wall section 82 is located higher than the dashboard's bottom section 44 of the dashboard's upper member 37. Thus, a lower portion of the left end opening 43 of the cowl box 15 is open as a left-end lower opening 43a. In this way, water having entered the cowl box 15 can be caused to flow out of the cowl box 15 through the left-end lower opening 43a.

Further, the joint part 77b of the pillar's leg section 77 is fixedly joined by welding to the rear joint part 87 of the extension's side wall section 82, and the joint part 78a of the pillar's slanting section 78 is fixedly joined by welding to the rear end portion 83c of the extension's upper bent section 83. The rear joint part 87 of the extension's side wall section 82 and the rear end portion 83c of the extension's upper bent section 83 together constitute a rear end portion 21b of the left side extension 21. Namely, the left front pillar 18 is connected to the rear end portion 21b of the left side extension 21.

Further, the rear joint part 12c of the left upper member 12 is fixedly joined by welding to the left end portion 45b of the front dashboard wall 45, and the rear joint part 12c is provided on the rear end portion 12b of the left upper member 12. In addition, the rear end portion 12b of the left upper member 12 is fixedly joined by welding to a left end portion 44c of the dashboard's bottom section 44. Thus, the rear end portion 21b of the left side extension 21 is fixedly joined by welding to the left end portion 45b of the front dashboard wall 45 and the left end portion 44c of the dashboard's bottom section 44.

As shown in Fig. 8, the front joint part 85 of the extension's side wall section 82 is fixedly joined by welding to the left end portion 45b of the front dashboard wall 45, and the rear lower joint part 86 of the extension's side wall section 82 is fixedly joined by welding to the left end portion 46b of the rear dashboard wall 46. Further, the front end portion 64 of the damper housing support 39 is fixedly joined by welding to the front dashboard wall 45. Further, the rear end portion 65 of the damper housing support 39 is fixedly joined by welding to the rear windshield wall 52.

In addition, as shown in Fig. 5, the joint projection 66 of the support's rear end portion 65 is sandwiched between the dashboard's rear joint part 49 and the windshield's lower joint part 51. Thus, as shown in Fig. 8, the front dashboard wall 45, rear windshield wall 52, left side extension 21 and damper housing support 39 are disposed in a generally rectangular configuration as viewed in plan, so that the rigidity of the cowl box 15 can be increased. With the increased rigidity of the cowl box 15, a load F1 input from the front of the vehicle body 11 to the cowl box 15 as shown in Fig. 8 can be borne by the cowl box 15 and efficiently transmitted to the left front pillar 18 via the cowl box 15. Further, the extension's upper bent section 83 (joint end portion 83a and joint portion 83b) is fixedly joined to the left end portion 53b of the windshield's upper end section 53.

Thus, the extension's upper bent section 83 can be reinforced with the left end portion 53b of the windshield's upper end section 53 (i.e., with the left end portion 15a of the cowl box 15). Thus, the rigidity of the left side extension 21 can be increased, so that a front side fender can be firmly supported by the rigidity-increased left side extension 21.

The left dashboard's side member 22 is provided on the left end portion 15a of the cowl box 15, left side extension 21, left upper member 12, left damper housing 13, etc.

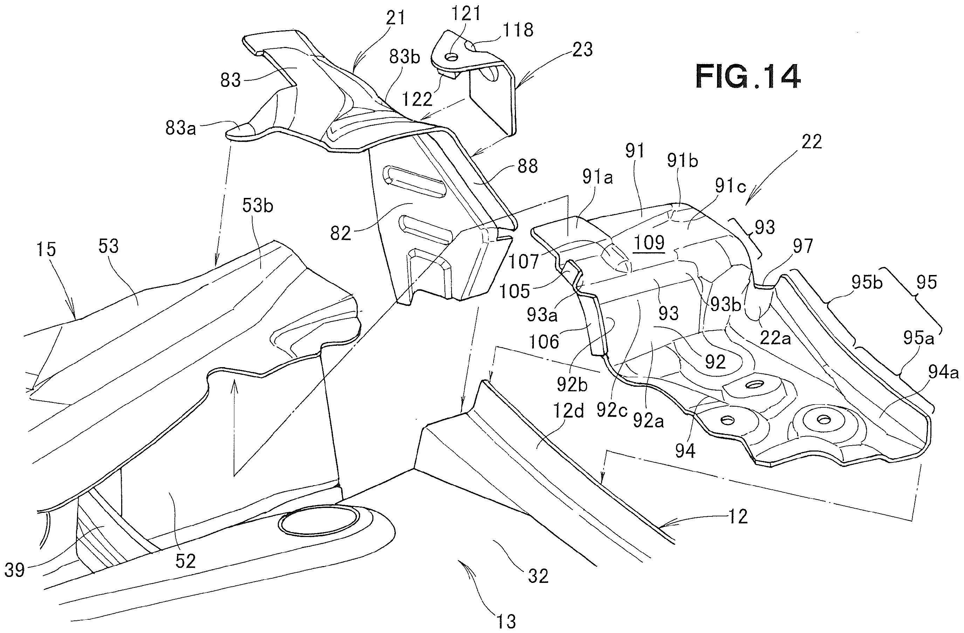

As shown in Figs. 13 and 14, the left dashboard's side member 22 includes the first horizontal section 91 mounted to the underside of the windshield's upper end section 53 (left end portion 53b of the windshield's upper end section 53), ridge line portion (side-member's ridge line portion) 93 formed integrally with and forwardly of the front end of the first horizontal section 91, and a wall portion (side-member's wall portion) 92 extending downward from a front end portion 93b of the ridge line portion 93.

The left dashboard's side member 22 further includes a second horizontal section 94 extending forward continuously from a lower end portion 92a of the side-member's wall portion 92, and a side-member's joint part 95 projecting upward from an outer end portion 94a of the second horizontal section 94. Besides, the left dashboard's side member 22 is provided on the left end portion 15a of the cowl box 15, left side extension 21, left upper member 12, left damper housing 13.

Thus, the left side extension 21 and the left dashboard's side member 22 together define a left closed space 41a in the end portion 15a of the cowl box 15. In this way, the rigidity of the left end portion 15a of the cowl box 15 can be increased, so that a load input at the time of a frontal collision, particularly an offset collision, can be efficiently transmitted rearwardly or toward the rear of the vehicle body.

In the illustrated example, the left dashboard's side member 22 is a rigid member formed of a high-tensile steel plate (JAC590R) having a thickness of 2.0 mm. Thus, at the time of input of an impact load, the instant embodiment can efficiently transmit the impact load toward the rear of the vehicle body while suppressing deformation of the left dashboard's side member 22.

The left dashboard's side member 22 includes a hood hinge (not shown) via which a hood 28 of Fig. 6 is supported by the vehicle body 11 for opening and closing pivoting movement.

Among the conventionally-known vehicles are ones where the left and right dashboard's side members are mounted to the left and right upper members, and where a hood hinge stiffener is provided on each of the dashboard's side members and the hood hinge is mounted to the hood hinge stiffener. Namely, with such conventionally-known vehicles, two different types of component parts, i.e. hood hinge stiffener and dashboard's side member, are required for supporting each of the hood hinges on the vehicle body.

Thus, in the instant embodiment, the left dashboard's side member 22 is provided on the left end portion 15a of the cowl box 15, left side extension 21, left upper member 12, left damper housing 13, etc., and the hood hinge is provided directly on the left dashboard's side member 22. In this way, the left dashboard's side member 22 supporting the hood hinge can comprise a single component part. As a result, the instant embodiment can reduce the number of necessary component parts.

As an example, the left dashboard's side member 22 may be press-formed of a flat plate. When the left dashboard's side member 22 is press-formed of a flat plate like this, it is necessary to form or draw an intersecting part 22a between the side-member's wall portion 92 and the side-member's joint part 95 into an angular shape. Thus, unwanted creases can be produced in the intersecting part 22a.

For this reason, the left dashboard's side member 22 in the instant embodiment has a recess 97 formed in the intersecting part 22a between the side-member's wall portion 92 and the side-member's joint part 95. Thus, the instant embodiment can reduce an amount of necessary drawing of the intersecting part 22a and thereby prevent unwanted creases from being produced in the intersecting part 22a when the left dashboard's side member 22 is press-formed of a flat plate.

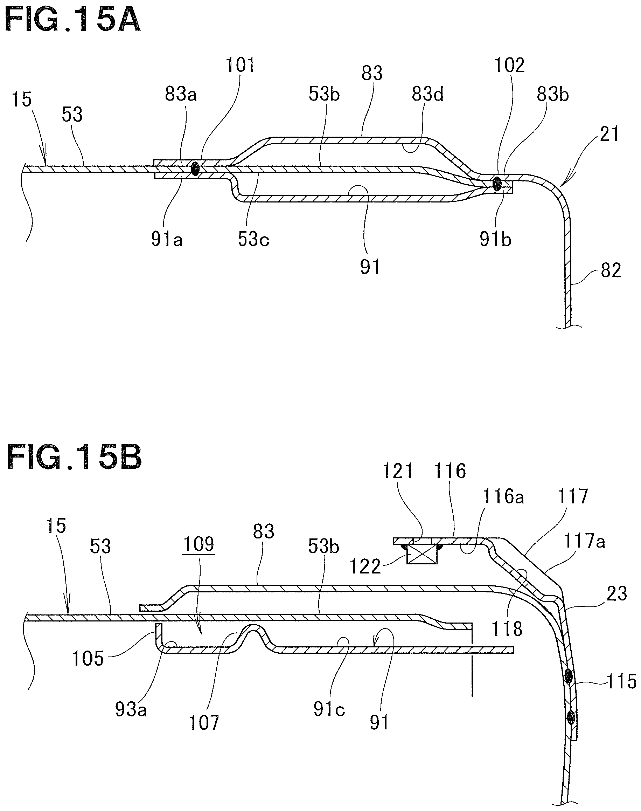

As shown in Figs. 14 and 15A, the first horizontal section 91 is disposed substantially horizontally underneath the left end portion 53b of the windshield's upper end section 53. More specifically, the left end portion 53b of the windshield's upper end section 53 is lapped over the first horizontal section 91, and the extension's upper bent section 83 is lapped over the left end portion 53b of the windshield's upper end section 53.

An inner joint part 91a of the first horizontal section 91 and the joint end portion 83a of the extension's upper bent section 83 are joined together by welding in overlapped relation to each other. Thus, the first horizontal section 91 is connected to the lower surface 53c of the left end portion 53b of the windshield's upper end section 53 and the lower surface 83d of the extension's upper bent section 83. In this state, the left end portion 53b of the windshield's upper end section 53 is interposed between the first horizontal section 91 and the extension's upper bent section 83.

As shown in Figs. 13 and 14, a joint part 101 (see also Fig. 15A) among the inner joint part 91a of the first horizontal section 91, the left end portion 53b of the windshield's upper end section 53 and the joint end portion 83a of the extension's upper bent section 83 is located substantially on an extension of the left front pillar 18. A joint part 102 (see also Fig. 15A) among the outer joint part 91b of the first horizontal section 91, the left end portion 53b of the windshield's upper end section 53 and the bent portion 83b of the extension's upper bent section 83 too is located substantially on the extension of the left front pillar 18.

The side-member's ridge line portion 93 is provided on a front end portion 91c of the first horizontal section 91, and the wall portion 92 extends downward from the front end portion 93b of the ridge line portion 93. Further, the wall portion 92 is disposed inwardly, in the vehicle width direction, of the extension's side wall section 82, and has a projection (hereinafter referred to as "second projection") 106 formed on an inner end portion 92b thereof and projecting toward the front of the vehicle body.

The following describe the reason why the second projection 106 is provided on the wall portion 92. The wall portion 92 functions to prevent vehicle washing water etc. from entering the cowl box 15 through the upper opening 74 of the cowl box 15. However, the vehicle washing water etc. may be undesirably directed inwardly in the vehicle width direction along the wall portion 92.

For this reason, in the instant embodiment, the second projection 106 is provided to project from the inner end portion 92b of the wall portion 92 toward the front of the vehicle body. Thus, when the vehicle washing water etc. has been directed inwardly in the vehicle width direction along the wall portion 92, it can be effectively blocked by the second projection 106. In this way, the vehicle washing water etc. can be prevented from entering the cowl box 15 along the wall portion 92.

The side-member's ridge line portion 93 is provided on a front end portion 91c of the first horizontal section 91, and the wall portion 92 extends downward from the front end portion 93b of the ridge line portion 93 as noted above. Namely, the side-member's ridge line portion 93 is provided where the first horizontal section 91 and the wall portion 92 intersect each other, and thus, the ridge line portion 93 extends continuously with the front end portion 91c of the first horizontal section 91 and an upper end portion 92c of the wall portion 92. The side-member's ridge line portion 93 is formed in a substantially curved sectional shape, and thus, the provision of the ridge line portion 93 between the first horizontal section 91 and the wall portion 92 can even further increase the rigidity of the left end portion 15a of the cowl box 15.

Further, as shown in Figs. 14 and 15B, the side-member's ridge line portion 93 includes a projection (hereinafter referred to as "first projection") 105 provided on an inner end portion 93a thereof and projecting upward, and a ridge-line reinforcing bead 107 provided outwardly, in the vehicle with direction, of the first projection 105.

Namely, the first projection 105 is bent from the inner end portion 93a of the ridge line portion 93 to project upward, so that a space 109 between the ridge line portion 93 and the left end portion 53b of the windshield's upper end section 53 (i.e., upper portion of the cowl box 15) is closed with the first projection 105 (see also Fig. 10). In this way, vehicle washing water etc. can be prevented by the first projection 105 from entering the cowl box 15 through the space 109 between the ridge line portion 93 and the left end portion 53b of the windshield's upper end section 53.

The ridge-line reinforcing bead 107 is disposed adjacent to the inner end portion 93a of the ridge line portion 93 and outwardly, in the vehicle width direction, of the first projection 105 and extends in the front-rear direction of the vehicle body. The space 109 between the ridge line portion 93 and the left end portion 53b of the windshield's upper end section 53 can be closed with the ridge-line reinforcing bead 107 extending in the front-rear direction of the vehicle body. In this way, vehicle washing water etc. can be prevented by the ridge-line reinforcing bead 107 from entering the cowl box 15 through the space 109.

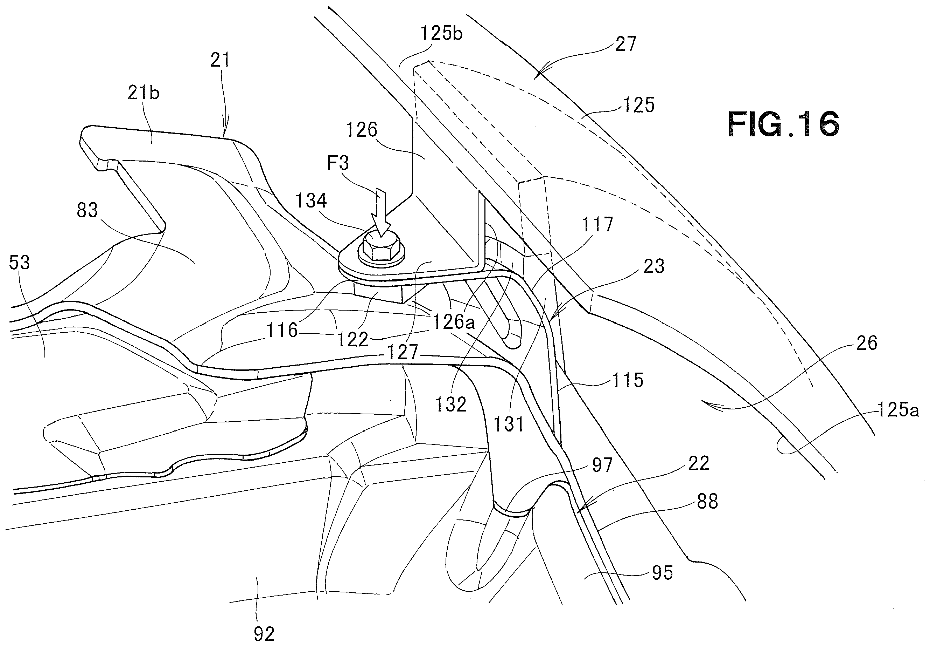

Further, the provision of the ridge-line reinforcing bead 107 on the ridge line portion 93 can increase the rigidity of the ridge line portion 93 and thereby increase the rigidity of the left end portion 15a of the cowl box 15. Thus, the upper bent section 83 of the left side extension 21 can be even further reinforced by the left end portion 15a of the cowl box 15. In this way, the left side fender 27 (Fig. 16) can be supported even more firmly by the upper bent section 83 of the left side extension 21.

The second horizontal section 94 extends forward from the lower end portion 92a of the wall portion 92 to be joined (or mounted) to the upper end section 32 of the damper housing 13. The side-member's joint part 95 projects upward from the outer end portion 94a of the second horizontal section 94, and this side-member's joint part 95 has a front half portion 95a and a rear half portion 95b located rearwardly of the front half portion 95a.

As shown in Fig. 13, the rear half portion 95b of the side-member's joint part 95 is fixedly joined by welding (or mounted) to the inner surface of the left side extension 21 (upper front joint part 88). Further, the front half portion 95a of the side-member's joint part 95 is fixedly joined by welding (or mounted) to the inner surface of the left upper member 12 (upper member's upper joint part 12d).

Namely, the second horizontal section 94 is joined to the housing's upper end section 32, and the side joint part 95 (front half portion 95a and rear half portion 95b) is joined to the left side extension 21 (upper front joint part 88) and the upper member's upper joint part 12d. Thus, the left dashboard's side member 22 can be supported by the left side extension 21 and the left upper member 12, so that a sufficient rigidity of the left dashboard's side member 22 can be secured. In this way, a load input via the left damper housing 13 can be efficiently transmitted to the left end portion 15a of the cowl box 15 by way of the left dashboard's side member 22.

It should also be noted that the rear half portion 95b, a joint part 111 of the upper front joint part 88, the front half portion 95a and a joint part 112 of the upper member's upper joint part 12d are located substantially on the extension of the left front pillar 18. As noted above, the joint part 101 (see also Fig. 15A) among the inner joint part 91a of the first horizontal section 91, the left end portion 53b of the windshield's upper end section 53 and the joint end portion 83a of the extension's upper bent section 83 are located substantially on the extension of the left front pillar 18. Further, the joint part 102 (see also Fig. 15A) among the outer joint part 91b of the first horizontal section 91, the left end portion 53b of the windshield's upper end section 53 and the joint end portion 83b of the extension's upper bent section 83 is located substantially on the extension of the left front pillar 18.

With the aforementioned arrangements, a load input from the front of the vehicle body to the left dashboard's side member 22 can be efficiently transmitted to the front pillar 18 via the joint part 95 and the first horizontal section 91.

Further, the left fender bracket 23 is mounted to the upper section (upper outer surface) 21a of the left side extension 21, more specifically to the upper end portion 82a of the extension's side wall section 82 (see Fig. 10). As shown in Figs. 10 and 16, the left fender bracket 23, mounted to the upper end portion 82a of the extension's side wall section 82, is located rearwardly of the left dashboard's side member 22 (more specifically, rearwardly of the side joint part 95 of the second horizontal section 94).

More specifically, the left fender bracket 23 integrally includes a mounting portion (bracket's mounting portion) 115 fixedly joined to the upper end portion 82a of the extension's side wall section 82, an upper end portion (bracket's upper end portion) 116 located upwardly of the bracket's mounting portion 115, and a ridge line portion 117 located between the upper end portion 116 and the mounting portion 115. The left fender bracket 23 is formed in a substantially hook shape (vertically inverted L shape) with the mounting portion 115, upper end portion 116 and ridge line portion 117 (see also Fig. 15B).

The bracket's mounting portion 115 extends substantially vertically, and the bracket's upper end portion 116 extends substantially horizontally. Further, the bracket's ridge line portion 117 extends in an upward slope from the mounting portion 115 to the upper end portion 116.

The bracket's mounting portion 115 is fixedly joined by welding to the upper end portion 82a of the extension's side wall section 82 and located rearwardly of the left dashboard's side member 22 (second horizontal section 94 and side-member's joint part 95). With the bracket's mounting portion 115 fixedly joined to the upper end portion 82a, the extension's side wall section 82 (and hence the left side extension 21) can be reinforced by the left fender bracket 23, so that the rigidity of the left side extension 21 can be increased.

Further, the left fender bracket 23 is located rearwardly of the left dashboard's side member 22 (second horizontal section 94 and side-member's joint part 95). Thus, the left fender bracket 23 can prevent the left side extension 21 from deforming outwardly in the vehicle width direction by the left dashboard's side member 22 being pushed by a load F2, input from the front of the vehicle body, toward the rear of the vehicle.

The left front pillar 18 is connected to the rear end portion 21b of the left side extension 21. Thus, the load F2 input from the front of the vehicle body to the left dashboard's side member 22 can be efficiently transmitted to the left front pillar 18 by way of the left side extension 21.

As shown in Figs. 15B and 16, the bracket's upper end portion 116 is disposed above the mounting portion 115 and extension's upper bent section 83 at a predetermined interval from the extension's upper bent section 83. The bracket's upper end portion 116 has a mounting hole 121 formed therein, and a welding nut 122 is provided on the underside 116a of the bracket's upper end portion 116 and coaxially with the mounting hole 121. The bracket's upper end portion 116 is formed to support the left side fender 27.

The bracket's ridge line portion 117 is formed where the upper end portion 116 and the bracket's mounting portion 115 intersect each other, so as to extend continuously with an outer end portion of the upper end portion 116 and an upper end portion of the mounting portion 115.

A bracket's reinforcing bead (or bracket's bead) 118 is formed on the bracket's ridge line portion 117. The bracket's reinforcing bead 118 extends vertically, slanting in the vehicle width direction, on and along (or across) the bracket's ridge line portion 117 and has a cross-sectional shape bulging downwardly from the ridge line portion 117. With the bracket's reinforcing bead 118 having such a cross-sectional shape bulging downwardly from the ridge line portion 117, the bracket's ridge line portion 117 has its upper surface 117a (see also Fig. 10) hollowed downwardly. Further, mounting accuracy of the left side fender 27 can be enhanced with the bracket's reinforcing bead 118 formed on the bracket's ridge line portion 117. Thus, the left side fender 27 can be positioned substantially in flush with the hood 28 (see also Fig. 6) adjoining the left side fender 27, so that it is possible to secure a desired external fitting accuracy (mounting accuracy as viewed from outside the vehicle) of the left side fender 27 and hood 28.

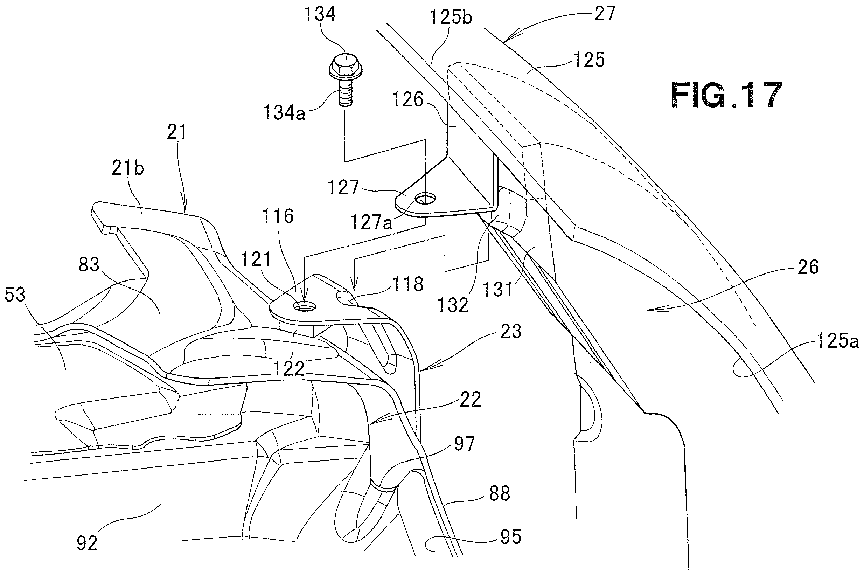

The left side fender 27 is mounted, from outside the vehicle body, to the left fender bracket 23 via a left partition pad 26. As shown in Figs. 16 and 17, the left side fender 27 includes a fender body 125 having the left partition pad 26 provided on the inner surface 125a thereof, a vertical section 126 extending downward from an upper end portion of the fender body 125, and a fender mounting section 127 projecting inwardly, in the vehicle width direction, from a lower end portion of the vertical section 126. The fender mounting section 127 has a through-hole 127a formed therein. The fender body 125 is an exterior panel that covers the left fender bracket 23 from outside the vehicle body and that has the partition pad 26 provided on the inner surface 125a.

The left partition pad 26 has a vertical surface 131 opposed to the outer surface 126a of the fender's vertical section 126, and a restricting bead 132 extending vertically for fitting engagement with the bracket's reinforcing bead 118. The left partition pad 26 is formed, for example, of urethane foam.

With the restricting bead 132 fitted with the bracket's reinforcing bead 118, the fender mounting section 127 is placed on the upper end portion 116. In this state, a threaded portion 134a of a mounting bolt 134 is inserted through the through-hole 127a of the fender mounting section 127 and the mounting hole 121 of the bracket's upper end portion 116 so that the threaded portion 134a is screwed into the welding nut 122.

In the aforementioned manner, the fender mounting section 127 is fixedly mounted to the bracket's upper end portion 116 by means of the mounting bolt 134 and welding nut 122. Then, the left partition pad 26 is inserted, from below the vehicle body, into between the left fender mounting section 127 and the left upper member 112.

The restricting bead 132 protrudes toward the above-mentioned bracket's reinforcing bead 118 and is fittingly engageable with the reinforcing bead 118 from above. With the restricting bead 132 fittingly engaging with the reinforcing bead 118, the partition pad 26 can be accurately positioned at a predetermined position. Further, because the partition pad 26 is mounted to the left side fender 27, the fitting engagement between the restricting bead 132 and the bracket's reinforcing bead 118 allows the left side fender 27 to be accurately positioned at a predetermined position, thereby facilitating mounting operation of the left side fender 27.

As shown in Fig. 10, the bracket's reinforcing bead 118 extends vertically, while slanting in the vehicle width direction as further shown in Fig. 10, to the outer end portion of the bracket's upper end portion 116 and to the upper end portion of the mounting portion 115. Thus, the bracket's reinforcing bead 118 can reinforce the bracket's upper end portion 116 and thereby secure a sufficient rigidity of the left fender bracket 23. In this way, when the left side fender 27 is to be mounted to the left fender bracket 23 by means of the mounting bolt 134, a load F3 input from above can be efficiently borne by the left fender bracket 23.

As an example, the left partition pad 26 is formed of foam urethane and supported by the left fender bracket 23. Thus, the left partition pad 26 functions to absorb an input impact load. By being supported by the left fender bracket 23, the left partition pad 26 is located outwardly, in the vehicle width direction, of the cowl box 15. Namely, the left partition pad 26 partitions the left side fender 23, i.e. partitions between the engine room 34 and the cowl box 15. In this way, the instant embodiment can prevent heat in the engine room 34 from entering the cowl box 15 through between the left upper member 12 and the left side fender 27.

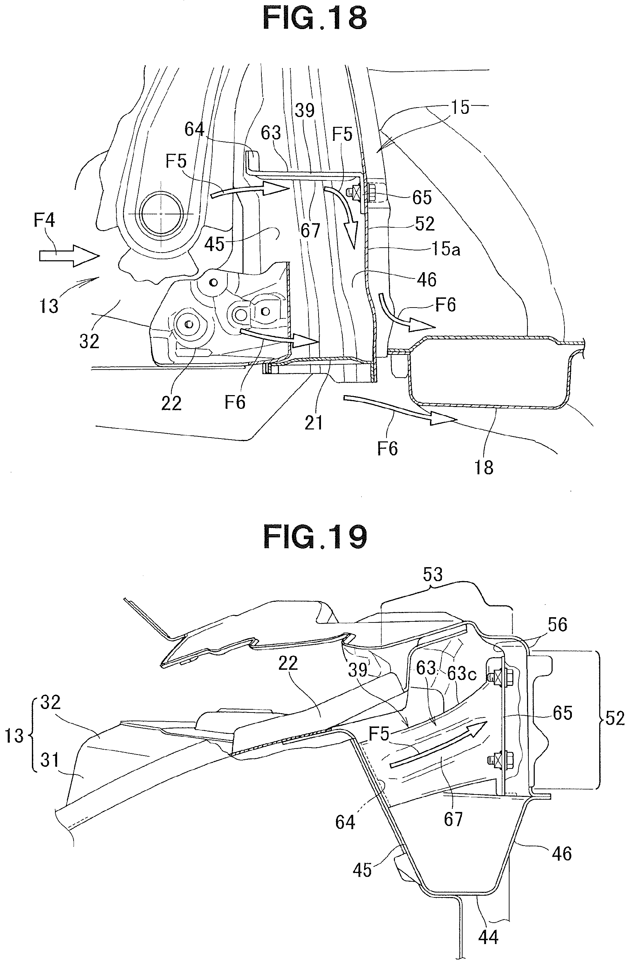

The following describe, with reference to Figs. 18 to 20, an example manner in which a load F4 input to the left damper housing 13 is transmitted to the left front pillar 18 via the left end portion 15a of the cowl box 15 in the instant embodiment. As shown in Fig. 18, the front dashboard wall 45, rear windshield wall 52, left side extension 21 and damper housing support 39 are disposed together constitute a generally rectangular configuration as viewed in plan, so that the rigidity of the cowl box 15 can be significantly increased.

When the load F4 has been input to the left damper housing 13 from the front of the vehicle body, a part of the input load F4 is transmitted to the damper housing support 39 as a load F5 by way of the left damper housing 13. Namely, because the left damper housing 13 has a great rigidity and thus is difficult to deform in response to the input load, it would be moved rearwardly due to the input load F4, so that a part of the load F4 is transmitted to the damper housing support 39 as the load F5.

As shown in Fig. 19, the beam section 63 of the damper housing support 39 is formed in an upward slating shape extending obliquely upwardly and rearwardly. Further, the support's beam section 63, support's front end portion 64 and support's rear end portion 65 have the beam reinforcing bead 67, front reinforcing bead 68 and rear reinforcing bead 69, respectively (see Fig. 9). Thus, the load F5 transmitted to the damper housing support 39 can be efficiently transmitted to the rear windshield wall 52 via the damper housing support 39.

As shown in Fig. 18, the rear end portion 65 of the damper housing support 39 is bent outwardly, in the vehicle width direction, toward the left front pillar 18. Thus, the load F5 transmitted via the damper housing support 39 to the support's rear end portion 65 can be efficiently transmitted to the rear windshield wall 52 via the support's rear end portion 65. In this way, the load F5 transmitted to the support's rear end portion 65 can be efficiently transmitted to the left front pillar 18.

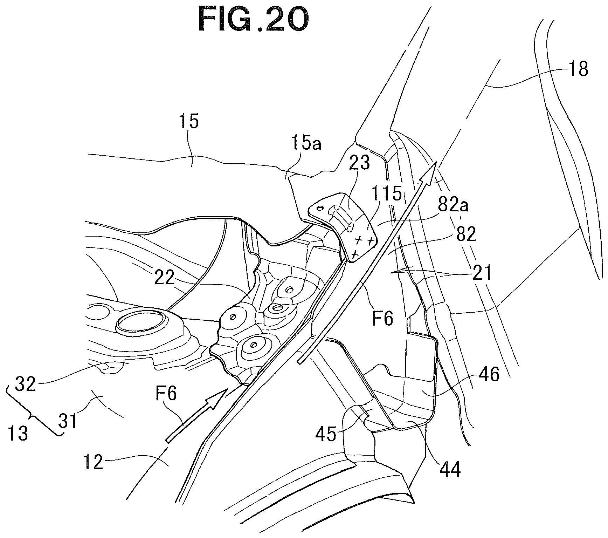

Meanwhile, the remaining part of the load F4 input to the left damper housing 13 is transmitted to the left side extension 21 as a load F6 by way of the left dashboard's side member 22. Then, the load F6 transmitted to the left side extension 21 is then transmitted to the left front pillar 18 by way of the left dashboard's side member 22, as shown in Fig. 20.

The mounting portion 115 of the left fender bracket 23 is fixedly joined by welding to the upper end portion 82a of the extension's side wall section 82. Thus, the rigidity of the extension's side wall section 82 (namely, the left side extension 21) is increased by the bracket's mounting portion 115 (left fender bracket 23). In this way, when the left dashboard's side member 22 has been pushed outwardly by the load F6 transmitted to the left side extension 21 via the left dashboard's side member 22, outward bulging deformation of the left fender bracket 23 can be suppressed by the left fender bracket 23, so that the load F6 can be efficiently transmitted to the left front pillar 18.

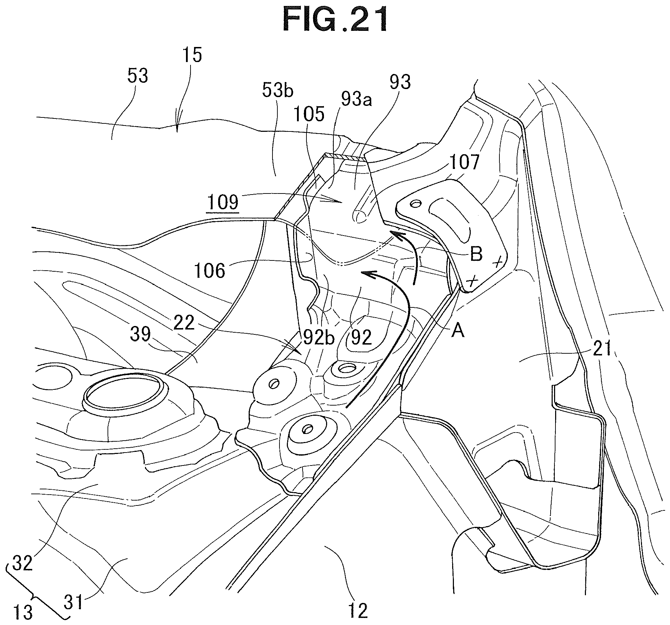

Further, the following describe, with reference to Figs. 21 and 5, an example manner in which vehicle washing water etc. is prevented from entering the cowl box 15 in the instant embodiment. As shown in Fig. 21, the second projection 106 projects forward from the inner end portion 92b of the wall portion 92 of the left dashboard's side member 22. Thus, when vehicle washing water etc. has been directed inwardly in the vehicle width direction along the wall portion 92 as indicated by arrow A, flows of the vehicle washing water etc. can be blocked by the second projection 106, so that the vehicle washing water etc. can be prevented from entering the cowl box 15 along the wall portion 92. Further, the space 109 between the ridge line portion 93 and the left end portion 53b of the windshield's upper end section 53 is closed with the first projection 105 projecting from the inner end portion 93a of the ridge line portion 93, as noted previously.

In addition, the ridge-line reinforcing bead 107 protrudes from near the inner end portion 93a of the ridge line portion 93, so that the space 109 between the ridge line portion 93 and the left end portion 53b of the windshield's upper end section 53 can be closed with the ridge-line reinforcing bead 107. Thus, when vehicle washing water etc. has flown to the space 109 as indicated by arrow B, the ridge-line reinforcing bead 107 and the first projection 105 can prevent the vehicle washing water etc. from entering the cowl box 15 via the space 109.

Furthermore, the damper housing support 39 is disposed outwardly, in the vehicle width direction, of the air conditioning air inlet 55 and adjacent to the left end portion 15a. In addition, the support's front end portion 64 (upper end part 64a) is disposed on the dashboard's upper ridge line portion 48, while the support's rear end portion 65 (upper end part 65b) is disposed on the windshield's upper ridge line portion 56. Thus, the damper housing support 39 can prevent vehicle washing water, having entered the cowl box 15 through the upper opening 74, from flowing to the air conditioning air inlet 55.

It should be appreciated that the front vehicle body structure of the present invention is not limited to the above-described embodiment and may be modified variously. For example, the shapes and constructions of the front vehicle body structure, vehicle body 11, damper housing 13, dashboard's lower member 14, cowl box 15, front pillar 18, side extension 21, dashboard's side member 22, fender bracket 23, partition pad 26, side fender 27, dashboard's upper member 37, windshield's lower member 38, damper housing support 39, air conditioning air inlet 55, extension's side wall section 82, extension's upper bent section 83, first horizontal section 91, wall portion 92, ridge line portion 93, second horizontal section 94, side-member's joint part 95, recess 97, first and second projections 105 and 106, ridge-line reinforcing bead 107, bracket's mounting portion 115, bracket's upper end portion 116, bracket's ridge line portion 117, bracket's bead 118 and restricting bead 132, etc. may be modified as appropriate without being limited to those shown and described above.

The basic principles of the present invention are well suited for application to automotive vehicles which include a cowl box disposed rearwardly of damper housings and front pillars disposed rearwardly of the cowl box.

Left and right side extensions (21) each include a side wall section (82) covering one of left and right end portions of a cowl box (15), and an upper bent section (83) bent from the wall section toward the upper surface of the end portion of the cowl box. Each of left and right side extensions (21) has a hook shape defined with the wall section and upper bent section, and left and right dashboard's side members (22) each include: a first horizontal section (91) mounted to the underside of the upper bent section; a ridge line portion (93) formed integrally with and forwardly of the horizontal section, the ridge line portion having a first projection (105) on its inner end portion and projecting upwardly; and a wall portion (92) extending downward from a front end portion of the ridge line portion and located inwardly of the wall section.

## Claims

1. A front vehicle body structure (10) including: a cowl box (15) provided on an upper section of a dashboard's lower member (14) partitioning between an engine room (34) and a passenger compartment (35); left and right damper housings (13) provided forwardly of the cowl box; left and right side extensions (21) provided adjacent to the left and right damper housings and closing left and right end portions (15a) of the cowl box; left and right dashboard's side members (22) mounted to the left and right side extensions (21) and the left and right damper housings (13); and left and right front pillars (118) connected to rear end portions (21b) of corresponding ones of the left and right side extensions (21), wherein each of the left and right side extensions (21) includes a side wall section (82) covering a corresponding one of the left and right end portions (15a) of the cowl box (15), and an upper bent section (83) bent from an upper end portion of the side wall section (82) toward an upper surface of the corresponding end portion (15a) of the cowl box, the side extension (21) having a substantially hook shape defined with the side wall section (82) and the upper bent section (83), and **characterized in that** each of the left and right dashboard's side members (22) includes: a first horizontal section (91) mounted to an underside of the upper bent section (83) of a corresponding one of the left and right side extensions (21); a side-member's ridge line portion (93) formed integrally with and forwardly of the first horizontal section (91), the ridge line portion (93) having a first projection (105) provided on an inner end portion, in a vehicle width direction, of the ridge line portion (93) and projecting upwardly; and a side-member's wall portion (92) extending downward from a front end portion of the ridge line portion (93) and located inwardly, in the vehicle width direction, of the side wall section (82) of the corresponding side extension (21).

2. The front vehicle body structure according to claim 1, wherein the side-member's wall portion (92) of each of the left and right dashboard's side members (22) has a second projection (106) provided on an inner end portion thereof and projecting in a forward direction of the vehicle body (11).

3. The front vehicle body structure according to claim 1 or 2, wherein the side-member's ridge line portion (93) of each of the left and right dashboard's side members (22) has a ridge-line reinforcing bead (107) provided adjacent to an inner end portion (93a) thereof and outwardly, in the vehicle width direction, of the first projection and extending in a front-rear direction of the vehicle body.

4. The front vehicle body structure according to any one of claims 1 to 3, wherein each of the left and right dashboard's side members (22) includes a second horizontal section (94) extending from a lower end portion of the side member's wall portion in a forward direction of the vehicle body and mounted to a corresponding one of the left and right damper housings (13), and a side-member's joint part (95) projecting upward from an outer end portion of the second horizontal section (94) and mounted to an inner surface of the side wall section (83) of the corresponding side extension (21).

5. The front vehicle body structure according to any one of claims 1 to 4, wherein each of the left and right dashboard's side members (22) has a recess (97) formed in an intersecting part (22a) between the side-member's wall portion (92) and the side-member's joint part (95) of a corresponding one of the left and right dashboard's side members (22).

6. The front vehicle body structure according to 4 or 5, wherein the side-member's joint part (95) mounted to the inner surface of the side wall section (82) of the corresponding side extension (21) and the first horizontal section (91) mounted to the underside of the upper bent section (83) of the corresponding side extension (21) are disposed substantially on an extension of a corresponding one of the left and right front pillars (118).

7. The front vehicle body structure according to any one of claims 1 to 6, wherein the cowl box (15) comprises a dashboard's upper member (37) extending in a front-rear direction of the vehicle body from the upper section (14a) of the dashboard's lower member (14), a windshield's lower member (38) mounted to the dashboard's upper member (37) and supporting a windshield glass (59), and left and right damper housing supports (39) each disposed inwardly and rearwardly of a corresponding one of the left and right damper housings (13) and spanning between the dashboard's upper member (37) and the windshield's lower member (38).

8. The front vehicle body structure according to claim 7, wherein each of the left and right damper housing supports (39) includes a beam section (63) disposed between the dashboard's upper member (37) and the windshield's lower member (38), a support's front end portion (64) extending from a front end (63a) of the beam section (63) and mounted to a dashboard's upper ridge line portion (48) of the dashboard's upper member, and a support's rear end portion (65) extending from a rear end of the beam section (63) and mounted to a windshield's upper ridge line portion (56) of the windshield's lower member (38), and wherein the beam section (63) has an upper side portion (63c) formed in a shape slanting obliquely upwardly toward a rear of the vehicle body.

9. The front vehicle body structure according to claim 7 or 8, wherein the dashboard's upper member (37) has a substantially U shape, as viewed in side elevation, defined with a front dashboard wall (45), a rear dashboard wall (46) disposed rearwardly of the front dashboard wall (45) and a bottom section (44) interconnecting respective lower end portions of the front dashboard wall and the rear dashboard wall, the dashboard's upper member (37) including a dashboard's rear joint part (49) provided on an upper end portion thereof, and
wherein the windshield's lower member (38) includes a windshield's joint part (51) provided on a lower end portion thereof and mounted to the dashboard's rear joint part (49), each of the left and right damper housing supports (39) includes a joint projection (66) projecting rearwardly from the support's rear end portion (65), and the joint projection (66) is sandwiched between the dashboard's rear joint part (49) and the windshield's joint part (51).

10. The front vehicle body structure according to 8 or 9, wherein, in each of the left and right damper housing supports (39), the support's front end portion (64) is bent inwardly in the vehicle width direction while the support's rear end portion (65) is bent outwardly, in the vehicle width direction, toward the corresponding front pillar (118), and
wherein each of the damper housing supports (39) includes a beam reinforcing bead (67) provided on the beam section (63) and extending in the front-rear direction of the vehicle body, a front reinforcing bead (68) provided on the support's front end portion (64) and extending inwardly, in the vehicle width direction, from a front end of the beam reinforcing bead (67), and a rear reinforcing bead (69) provided on the support's rear end portion (65) and extending outwardly, in the vehicle width direction, from a rear end of the beam reinforcing bead (67).

11. The front vehicle body structure according to claim 9 or 10, wherein the front dashboard wall (45), a rear wall of the windshield's lower member (38), the side extension (21) and the damper housing support (39) are disposed in a substantially rectangular configuration as viewed in plan.

12. The front vehicle body structure according to any one of claims 7 to 11, wherein the windshield's lower member (37) has an air conditioning air inlet (55) for sucking outside air into the passenger compartment, and the damper housing support (39) is disposed outwardly, in the vehicle width direction, of the air conditioning air inlet (55).

13. The front vehicle body structure according to any one of claims 1 to 12, which further includes left and right upper members (12) slanting downward from the left and right end portions of the cowl box (15) toward a front of the vehicle body, left and right fender brackets (23) each mounted to an outer surface (21a) of a corresponding one of the left and right side extensions (21) and located rearwardly of a corresponding one of the left and right dashboard side members (22), and left and right side fenders (27) mounted to the left and right fender brackets (23) from outside the vehicle body.

14. The front vehicle body structure according to claim 13, wherein each of the fender brackets (23) includes a bracket's mounting portion (115) mounted to the corresponding side extension (21), a bracket's upper end portion (116) disposed above the bracket's mounting portion (115) and the corresponding side extension (21) for supporting a corresponding one of the left and right side fenders (27), and a bracket's ridge line portion (117) formed in an intersecting part between the bracket's upper end portion (94) and the bracket's mounting portion (15) in such a manner that the bracket's ridge line portion (117) extends continuously with the bracket's mounting portion (115) and the bracket's upper end portion (116), and
wherein the bracket's mounting portion (115), the bracket's upper end portion (116) and the bracket's ridge line portion (117) together constitute a substantially hook shape, the fender bracket (23) further including a bracket's bead (118) provided thereon and extending vertically on and along the bracket's ridge line portion (117).

15. The front vehicle body structure according to claim 14, which further includes left and right partition pads (26) each supported by a corresponding one of the left and right fender brackets (23) for partitioning an inner surface of the corresponding side fender (27),
wherein each of the side fenders (27) includes a fender body (125) covering the corresponding fender bracket (23) from outside the vehicle body and having the left or right partition pad (26) provided on the inner surface (125a) thereof, a vertical section (126) extending downward from an upper end portion of the fender body (125), and a fender mounting section (127) projecting inwardly, in the vehicle width direction, from a lower end portion of the vertical section (126), and
wherein each of the left and right partition pads (26) includes a vertical surface (131) opposed to an outer surface of the vertical section (126) of the corresponding side fender (27), and a restricting bead (132) extending vertically for fitting engagement with the bracket's bead (118) of the corresponding fender bracket (23).

## Patentansprüche

1. Fahrzeugkarosserie-Frontstruktur (10), welche enthält: einen Windlaufkasten (15), der an einem oberen Abschnitt eines unteren Spritzwandelements (14) vorgesehen ist, der zwischen einem Motorraum (34) und einem Insassenraum (35) unterteilt; linke und rechte Dämpferaufnahmen (13), die vordem Windlaufkasten vorgesehen sind;
linke und rechte Seitenverlängerungen (21), die benachbart den linken und rechten Dämpferaufnahmen vorgesehen sind und linke und rechte Endabschnitte (15a) des Windlaufkastens verschließen; linke und rechte Spritzwand-Seitenelemente (22), die an den linken und rechten Verlängerungen (21) mit den linken und rechten Dämpferaufnahmen (13) angebracht sind; sowie linke und rechte Frontsäulen (118), die mit hinteren Endabschnitten (21b) einer entsprechenden der linken und rechten Seitenverlängerungen (21) verbunden sind,
wobei jede der linken und rechten Seitenverlängerungen (21) einen Seitenwandabschnitt (82) enthält, der einen entsprechenden der linken und rechten Endabschnitte (15a) des Windlaufkastens (15) abdeckt, sowie einen oberen gebogenen Abschnitt (83), der von einem oberen Abschnitt des Seitenwandabschnitts (82) zu einer Oberseite des entsprechenden Endabschnitts (15a) des Windlaufkastens gebogen ist, wobei die Seitenverlängerung (21) eine angenäherte Hakenform hat, die mit dem Seitenwandabschnitt (82) und dem oberen gebogenen Abschnitt (83) definiert ist, und
**dadurch gekennzeichnet, dass** jedes der linken und rechten Spritzwand-Seitenelemente (22) enthält: einen ersten horizontalen Abschnitt (91), der an einer Unterseite des oberen gebogenen Abschnitts (83) einer entsprechenden der linken und rechten Seitenverlängerungen (21) angebracht ist; einen Seitenelement-Rückenlinienabschnitt (93), der einstückig mit und vor dem ersten horizontalen Abschnitt (91) ausgebildet ist, wobei der Rückenlinienabschnitt (93) einen ersten Vorsprung (105) aufweist, der an einem in Fahrzeugbreitenrichtung inneren Endabschnitt des Rückenlinienabschnitts (93) vorgesehen ist und nach oben vorsteht; sowie einen Seitenelement-Wandabschnitt (92), der sich von einem vorderen Endabschnitt des Rückenlinienabschnitts (93) nach unten erstreckt und in der Fahrzeugbreitenrichtung einwärts des Seitenwandabschnitts (82) der entsprechenden Seitenverlängerung (21) angeordnet ist.

2. Die Fahrzeugkarosserie-Frontstruktur nach Anspruch 1, wobei der Seitenelement-Wandabschnitt (92) von jedem der linken und rechten Spritzwand-Seitenelemente (22) einen zweiten Vorsprung (106) aufweist, der an seinem inneren Endabschnitt vorgesehen ist und in vorwärtiger Richtung der Fahrzeugkarosserie (11) vorsteht.

3. Die Fahrzeugkarosserie-Frontstruktur nach Anspruch 1 oder 2, wobei der Seitenelement-Rückenlinienabschnitt (93) von jedem der linken und rechten Spritzwand-Seitenelemente (22) einen Rückenlinien-Verstärkungswulst (107) aufweist, der benachbart einem inneren Endabschnitt (93a) und in der Fahrzeugbreitenrichtung auswärts des ersten Vorsprungs vorgesehen ist und sich in Vorne-Hinten-Richtung der Fahrzeugkarosserie erstreckt.

4. Die Fahrzeugkarosserie-Frontstruktur nach einem der Ansprüche 1 bis 3, wobei jedes der linken und rechten Spritzwand-Seitenelemente (22) einen zweiten horizontalen Abschnitt (94) enthält, der sich von einem unteren Endabschnitt des Seitenelement-Wandabschnitts in vorwärtiger Richtung der Fahrzeugkarosserie erstreckt und an einer entsprechenden der linken und rechten Dämpferaufnahmen (13) angebracht ist, sowie ein Seitenelement-Verbindungsteil (95), das von einem äußeren Endabschnitt des zweiten horizontalen Abschnitts (94) aufwärts vorsteht und an einer Innenoberfläche des Seitenwandabschnitts (83) der entsprechenden Seitenverlängerung (21) angebracht ist.

5. Die Fahrzeugkarosserie-Frontstruktur nach einem der Ansprüche 1 bis 4, wobei jedes der linken und rechten Spritzwand-Seitenelemente (22) eine Vertiefung (97) aufweist, die in einem Überschneidungsteil (22a) zwischen dem Seitenelement-Wandabschnitt (92) und dem Seitenelement-Verbindungsteil (95) eines entsprechenden der linken und rechten Spritzwand-Seitenelemente (22) ausgebildet ist.

6. Die Fahrzeugkarosserie-Frontstruktur nach Anspruch 4 oder 5, wobei das Seitenelement-Verbindungsteil (95), das an der Innenoberfläche des Seitenwandabschnitts (82) der entsprechenden Seitenverlängerung (21) angebracht ist, und der erste horizontale Abschnitt (91), der an der Unterseite des oberen gebogenen Abschnitts (83) der entsprechenden Seitenverlängerung (21) angebracht ist, im Wesentlichen auf einer Verlängerung einer entsprechenden der linken und rechten Frontsäulen (118) angeordnet sind.

7. Die Fahrzeugkarosserie-Frontstruktur nach einem der Ansprüche 1 bis 6, wobei der Windlaufkasten (15) aufweist: ein oberes Spritzwandelement (37), das sich von dem oberen Abschnitt (14a) des unteren Spritzwandelements (14) in Vorne-Hinten-Richtung der Fahrzeugkarosserie erstreckt; ein unteres Windschutzscheibenelement (38), das an dem oberen Spritzwandelement (37) angebracht ist und eine Windschutzscheibe (59) trägt; sowie linke und rechte Dämpferaufnahmeträger (39), die jeweils einwärts und rückwärts einer entsprechenden der linken und rechten Dämpferaufnahmen (13) angeordnet sind und sich zwischen dem oberen Spritzwandelement (37) und dem unteren Windschutzscheibenelement (38) erstrecken.

8. Die Fahrzeugkarosserie-Frontstruktur nach Anspruch 7, wobei jeder der linken und rechten Dämpferaufnahmestützen (39) enthält: einen Balkenabschnitt (63), der zwischen dem oberen Spritzwandelement (37) und dem unteren Windschutzscheibenelement (38) angeordnet ist; einen vorderen Trägerendabschnitt (64), der sich an einem vorderen Ende (63a) des Balkenabschnitts (63) erstreckt und an einem oberen Spritzwand-Rückenlinienabschnitt (48) des oberen Spritzwandelements angebracht ist; sowie einen unteren Trägerendabschnitt (65), der sich von einem hinteren Ende des Balkenabschnitts (63) erstreckt und an einem oberen Windschutzscheiben-Rückenlinienabschnitt (56) des unteren Windschutzscheibenelements (38) angebracht ist, und wobei der Balkenabschnitt (63) einen Oberseitenabschnitt (63c) aufweist, der in einer Form ausgebildet ist, die zum Heck der Fahrzeugkarosserie schräg aufwärts geneigt ist.

9. Die Fahrzeugkarosserie-Frontstruktur nach Anspruch 7 oder 8, wobei das obere Spritzwandelement (37), bei Betrachtung in Seitenansicht, angenähert U-förmig ist, definiert mit einer vorderen Spritzwand-Wand (45), einer hinteren Spritzwand-Wand (46), die hinter der vorderen Spitzwand-Wand (45) angeordnet ist, sowie einen Bodenabschnitt (44), der jeweilige untere Endabschnitte der vorderen Spritzwand-Wand und der hinteren Spritzwand-Wand miteinander verbindet, wobei das obere Spritzwandelement (37) ein hinteres Spritzwand-Verbindungsteil (49) enthält, das an seinem oberen Endabschnitt vorgesehen ist, und
wobei das untere Windschutzscheibenelement (38) ein Windschutzscheiben-Verbindungsteil (51) enthält, das an seinem unteren Endabschnitt vorgesehen ist und an dem hinteren Spritzwand-Verbindungsteil (49) angebracht ist, wobei jeder der linken und rechten Dämpferaufnahmeträger (39) einen Verbindungsvorsprung (66) enthält, der von dem unteren Trägerendabschnitt (65) nach hinten vorsteht, und der Verbindungsvorsprung (66) zwischen dem hinteren Spritzwand-Verbindungsteil (49) und dem Windschutzscheiben-Verbindungsteil (51) geschichtet ist.

10. Die Fahrzeugkarosserie-Frontstruktur nach Anspruch 8 oder 9, wobei an jeder der linken und rechten Dämpferaufnahmeträger (39) der vordere Trägerendabschnitt (64) in der Fahrzeugbreitenrichtung einwärts gebogen ist, während der hintere Trägerendabschnitt (65), in der Fahrzeugbreitenrichtung, zu der entsprechenden Frontsäule (118) hin auswärts gebogen ist, und
wobei jeder der Dämpferaufnahmeträger (39) enthält: einen Balkenverstärkungswulst (67), der an dem Balkenabschnitt (63) vorgesehen ist und sich in der Vorne-Hinten-Richtung der Fahrzeugkarosserie erstreckt; einen vorderen Verstärkungswulst (68), der an dem vorderen Trägerendabschnitt (64) vorgesehen ist und sich in der Fahrzeugbreitenrichtung von einem vorderen Ende des Balkenverstärkungswulsts (67) einwärts erstreckt; sowie einen hinteren Verstärkungswulst (69), der an dem hinteren Trägerendabschnitt (65) vorgesehen ist und sich in der Fahrzeugbreitenrichtung von einem hinteren Ende des Balkenverstärkungswulsts (67) auswärts erstreckt.

11. Die Fahrzeugkarosserie-Frontstruktur nach Anspruch 9 oder 10, wobei die vordere Spritzwand-Wand (45), eine Rückwand des unteren Windschutzscheibenelements (38), die Seitenverlängerung (21) und der Dämpferaufnahmeträger (39) in Draufsicht in einer angenähert rechteckigen Konfiguration angeordnet sind.

12. Die Fahrzeugkarosserie-Frontstruktur nach einem der Ansprüche 7 bis 11, wobei das untere Windschutzscheibenelement (37) einen Klimaanlagen-Lufteinlass (55) aufweist, um Außenluft in den Insassenraum anzusaugen, und der Dämpferaufnahmeträger (39), in der Fahrzeugbreitenrichtung, auswärts des Klimaanlagen-Lufteinlasses (55) angeordnet ist.

13. Die Fahrzeugkarosserie-Frontstruktur nach einem der Ansprüche 1 bis 12, die ferner enthält: linke und rechte obere Elemente (12), die von den linken und rechten Endabschnitten des Windlaufkastens (15) zur Vorderseite der Fahrzeugkarosserie hin abwärts geneigt sind; linke und rechte Kotflügelträger (23), die jeweils an einer Außenoberfläche (21a) einer entsprechenden der linken und rechten Seitenverlängerungen (21) angebracht sind und hinter einem entsprechenden der linken und rechten Spritzwand-Seitenelemente (22) angeordnet sind; sowie linke und rechte Kotflügel (27), die von der Außenseite der Fahrzeugkarosserie an den linken und rechten Kotflügelträgern (23) angebracht sind.

14. Die Fahrzeugkarosserie-Frontstruktur nach Anspruch 13, wobei jeder der Kotflügelträger (23) enthält: einen Träger-Montageabschnitt (115), der an der entsprechenden Seitenverlängerung (21) angebracht ist; einen oberen Trägerendabschnitt (116), der über dem Träger-Montageabschnitt (115) und der entsprechenden Seitenverlängerung (21) angeordnet ist, um einen entsprechenden der linken und rechten Kotflügel (27) zu tragen; sowie einen Träger-Rückenlinienabschnitt (117), der in einem Überschneidungsteil zwischen dem oberen Trägerendabschnitt (94) und dem Träger-Montageabschnitt (15) derart ausgebildet ist, dass sich der Träger-Rückenlinienabschnitt (117) kontinuierlich mit dem Träger-Montageabschnitt (115) und dem oberen Trägerendabschnitt (116) erstreckt, und
wobei der Träger-Montageabschnitt (115), der obere Trägerendabschnitt (116) und der Träger-Rückenlinienabschnitt (117) gemeinsam eine angenäherte Hakenform darstellen, wobei der Kotflügelträger (23) ferner einen Trägerwulst (1118) enthält, der daran vorgesehen ist und sich im Wesentlichen auf und entlang dem Träger-Rückenlinienabschnitt (117) erstreckt.

15. Die Fahrzeugkarosserie-Frontstruktur nach Anspruch 14, die ferner linke und rechte Trennblöcke (26) aufweist, die an einem entsprechenden der linken und rechten Kotflügelträger (23) getragen sind, um eine Innenoberfläche des entsprechenden Kotflügels (27) zu trennen,
wobei jeder der Kotflügel (27) enthält: einen Kotflügelkörper (125), der den entsprechenden Kotflügelträger (23) von der Außenseite der Fahrzeugkarosserie abdeckt und der den linken oder rechten Trennblock (26) aufweist, der an seiner Innenoberfläche (125a) vorgesehen ist; einen vertikalen Abschnitt (126), der sich von einem oberen Endabschnitt des Kotflügelkörpers (125) nach unten erstreckt; sowie einen Kotflügel-Montageabschnitt (127), der in der Fahrzeugbreitenrichtung von einem unteren Endabschnitt des vertikalen Abschnitts (126) einwärts vorsteht, und wobei jeder der linken und rechten Trennblöcke (26) enthält: eine vertikale Oberfläche (131), die einer Außenoberfläche des vertikalen Abschnitts (126) des entsprechenden Kotflügels (27) gegenüberliegt; sowie einen Begrenzungswulst (132), der sich im Sitzeingriff mit dem Trägerwulst (118) des entsprechenden Kotflügelträgers (23) vertikal erstreckt.

## Revendications

1. Structure de carrosserie de véhicule avant (10) comportant : une caisse d'auvent (15) prévue sur une section supérieure d'un organe inférieur (14) du capot moteur séparant un compartiment moteur (34) et un habitacle passager (35) ; des logements d'amortisseur gauche et droit (13) prévus vers l'avant de la caisse d'auvent ; des extensions latérales gauche et droite (21) prévues adjacentes aux logements d'amortisseur gauche et droit et fermant des portions d'extrémité gauche et droite (15a) de la caisse d'auvent ; des organes latéraux (22) gauche et droit du capot moteur montés sur les extensions latérales gauche et droite (21) et les logements d'amortisseur gauche et droit (13) ; et des montants avant gauche et droit (118) raccordés à des portions d'extrémité arrière (21b) d'extensions correspondantes des extensions latérales gauche et droite (21),
dans laquelle chacune des extensions latérales gauche et droite (21) comporte une section de paroi latérale (82) couvrant une portion correspondante des portions d'extrémité gauche et droite (15a) de la caisse d'auvent (15), et une section courbée supérieure (83) courbée depuis une portion d'extrémité supérieure de la section de paroi latérale (82) vers une surface supérieure de la portion d'extrémité (15a) correspondante de la caisse d'auvent, l'extension latérale (21) ayant sensiblement une forme de crochet définie avec la section de paroi latérale (82) et la section courbée supérieure (83), et
**caractérisée en ce que** chacun des organes latéraux (22) gauche et droit du capot moteur comporte : une première section horizontale (91) montée sur une sous-face de la section courbée supérieure (83) d'une extension correspondante des extensions latérale gauche et droite (21) ; une portion de ligne de crête (93) de l'organe latéral formée d'un seul tenant avec et vers l'avant de la première section horizontale (91), la portion de ligne de crête (93) ayant une première saillie (105) prévue sur une portion d'extrémité intérieure, dans un sens de la largeur du véhicule, de la portion de ligne de crête (93) et saillant vers le haut ; et une portion de paroi (92) de l'organe latéral s'étendant vers le bas depuis une portion d'extrémité avant de la portion de ligne de crête (93) et située vers l'intérieur, dans le sens de la largeur du véhicule, de la section de paroi latérale (82) de l'extension latérale (21) correspondante.

2. Structure de carrosserie de véhicule avant selon la revendication 1, dans laquelle la portion de paroi (92) de l'organe latéral de chacun des organes latéraux (22) gauche et droit du capot moteur a une seconde saillie (106) prévue sur une portion d'extrémité intérieure de celui-ci et saillant dans une direction vers l'avant de la carrosserie de véhicule (11).

3. Structure de carrosserie de véhicule avant selon la revendication 1 ou 2, dans laquelle la portion de ligne de crête (93) de l'organe latéral de chacun des organes latéraux (22) gauche et droit du capot moteur a un cordon de renforcement de ligne de crête (107) prévu adjacent à une portion d'extrémité intérieure (93a) de celui-ci et vers l'extérieur, dans le sens de la largeur du véhicule, de la première saillie et s'étendant dans une direction d'avant en arrière de la carrosserie de véhicule.

4. Structure de carrosserie de véhicule avant selon l'une quelconque des revendications 1 à 3, dans laquelle chacun des organes latéraux (22) gauche et droit du capot moteur comporte une seconde section horizontale (94) s'étendant depuis une portion d'extrémité inférieure de la portion de paroi l'organe latéral dans une direction vers l'avant de la carrosserie de véhicule et montée sur un logement correspondant des logements d'amortisseur gauche et droit (13), et une partie de jonction (95) de l'organe latéral saillant vers le haut depuis une portion d'extrémité extérieure de la seconde section horizontale (94) et montée sur une surface intérieure de la section de paroi latérale (83) de l'extension latérale (21) correspondante.

5. Structure de carrosserie de véhicule avant selon l'une quelconque des revendications 1 à 4, dans laquelle chacun des organes latéraux (22) gauche et droit du capot moteur a un évidement (97) formé dans une partie d'intersection (22a) entre la portion de paroi (92) de l'organe latéral et la partie de jonction (95) de l'organe latéral d'un organe latéral correspondant des organes latéraux (22) gauche et droit du capot moteur.

6. Structure de carrosserie de véhicule avant selon la revendication 4 ou 5, dans laquelle la partie de jonction (95) de l'organe latéral montée sur la surface intérieure de la section de paroi latérale (82) de l'extension latérale (21) correspondante et la première section horizontale (91) montée sur la sous-face de la section courbée supérieure (83) de l'extension latérale (21) correspondante sont disposées sensiblement sur une extension d'un montant correspondant des montants avant gauche et droit (118).

7. Structure de carrosserie de véhicule avant selon l'une quelconque des revendications 1 à 6, dans laquelle la caisse d'auvent (15) comprend un organe supérieur (37) de capot moteur s'étendant dans une direction d'avant en arrière de la carrosserie de véhicule depuis la section supérieure (14a) de l'organe inférieur (14) du capot moteur, un organe inférieur (38) de pare-brise monté sur l'organe supérieur (37) du capot moteur et supportant un verre de pare-brise (59), et des supports de logement d'amortisseur gauche et droit (39) disposés chacun vers l'intérieur et vers l'arrière d'un logement correspondant des logements d'amortisseur gauche et droit (13) et enjambant l'espace entre l'organe supérieur (37) de capot moteur et l'organe inférieur du pare-brise (38).

8. Structure de carrosserie de véhicule avant selon la revendication 7, dans laquelle chacun des supports de logement d'amortisseur gauche et droit (39) comporte une section de poutre (63) disposée entre l'organe supérieur (37) du capot moteur et l'organe inférieur (38) du pare-brise, une portion d'extrémité avant (64) du support s'étendant depuis une extrémité avant (63a) de la section de poutre (63) et étant montée sur une portion de ligne de crête supérieure (48) du capot moteur de l'organe supérieur du capot moteur, et une portion d'extrémité arrière (65) du support s'étendant depuis une extrémité arrière de la section de poutre (63) et étant montée sur une portion de ligne de crête supérieure (56) du pare-brise de l'organe inférieur (38) du pare-brise, et dans laquelle la section de poutre (63) a une portion de côté supérieure (63c) formée selon une forme inclinée à l'oblique vers le haut vers un arrière de la carrosserie de véhicule.

9. Structure de carrosserie de véhicule avant selon la revendication 7 ou 8, dans laquelle l'organe supérieur (37) de capot moteur a sensiblement une forme en U, vue en élévation latérale, définie avec une paroi de capot moteur avant (45), une paroi de capot moteur arrière (46) disposée vers l'arrière de la paroi de capot moteur avant (45) et une section de dessous (44) reliant des portions d'extrémité inférieure respectives de la paroi de capot moteur avant et de la paroi de capot moteur arrière, l'organe supérieur (37) du capot moteur comportant une partie de jonction arrière (49) du capot moteur prévue sur une portion d'extrémité supérieure de celui-ci, et
dans laquelle l'organe inférieur (38) du pare-brise comporte une partie de jonction (51) du pare-brise prévue sur une portion d'extrémité inférieure de celui-ci et montée sur la partie de jonction arrière (49) du capot moteur, chacun des supports de logement d'amortisseur gauche et droit (39) comporte une saillie de jonction (66) saillant vers l'arrière depuis la portion d'extrémité arrière (65) du support, et la saillie de jonction (66) est enserrée entre la partie de jonction arrière (49) du capot moteur et la partie de jonction (51) du pare-brise.

10. Structure de carrosserie de véhicule avant selon la revendication 8 ou 9, dans laquelle, dans chacun des supports de logement d'amortisseur gauche et droit (39), la portion d'extrémité avant (64) du support est courbée vers l'intérieur dans le sens de la largeur du véhicule tandis que la portion d'extrémité arrière (65) du support est courbée vers l'extérieur, dans le sens de la largeur du véhicule, vers le montant avant (118) correspondant, et
dans laquelle chacun des supports de logement d'amortisseur (39) comporte un cordon de renforcement de poutre (67) prévu sur la section de poutre (63) et s'étendant dans la direction d'avant en arrière de la carrosserie de véhicule, un cordon de renforcement avant (68) prévu sur la portion d'extrémité avant (64) du support et s'étendant vers l'intérieur, dans le sens de la largeur du véhicule, depuis une extrémité avant du cordon de renforcement de poutre (67), et un cordon de renforcement arrière (69) prévu sur la portion d'extrémité arrière (65) du support et s'étendant vers l'extérieur, dans le sens de la largeur du véhicule, depuis une extrémité arrière du cordon de renforcement de poutre (67).

11. Structure de carrosserie de véhicule avant selon la revendication 9 ou 10, dans laquelle la paroi de capot moteur avant (45), une paroi arrière de l'organe inférieur (38) du pare-brise, l'extension de côté (21) et le support de logement d'amortisseur (39) sont disposés dans une configuration sensiblement rectangulaire vue en plan.

12. Structure de carrosserie de véhicule avant selon l'une quelconque des revendications 7 à 11, dans laquelle l'organe inférieur (37) du pare-brise a une arrivée d'air de climatisation (55) pour aspirer l'air extérieur dans l'habitacle passager, et le support de logement d'amortisseur (39) est disposé vers l'extérieur, dans le sens de la largeur du véhicule, de l'arrivée d'air de climatisation (55).

13. Structure de carrosserie de véhicule avant selon l'une quelconque des revendications 1 à 12, qui comporte en outre des organes supérieurs gauche et droit (12) inclinés vers le bas depuis les portions d'extrémité gauche et droite de la caisse d'auvent (15) vers un avant de la carrosserie de véhicule, des consoles d'aile gauche et droite (23) montées chacune sur une surface extérieure (21a) d'une extension correspondante des extensions latérales gauche et droite (21) et situés vers l'arrière d'un organe correspondant des organes latéraux (22) gauche et droit de capot moteur, et des ailes latérales gauche et droite (27) montées sur les supports d'aile gauche et droit (23) depuis l'extérieur de la carrosserie de véhicule.

14. Structure de carrosserie de véhicule avant selon la revendication 13, dans laquelle chacun des supports d'aile (23) comporte une portion de montage (115) de console montée sur l'extension latérale (21) correspondante, une portion d'extrémité supérieure (116) de la console disposée au-dessus de la portion de montage (115) de la console et l'extension latérale (21) correspondante pour supporter une aile correspondante des ailes latérales gauche et droite (27), et une portion de ligne de crête (117) de la console formée dans une partie d'intersection entre la portion d'extrémité supérieure (94) de la console et la portion de montage (15) de la console de manière à ce que la portion de ligne de crête (117) de la console s'étende de façon continue avec la portion de montage (115) de la console et la portion d'extrémité supérieure (116) de la console, et
dans laquelle la portion de montage (115) de la console, la portion d'extrémité supérieure (116) de la console et la portion de ligne de crête (117) de la console constituent ensemble sensiblement une forme de crochet, la console d'aile (23) comportant en outre un cordon (118) de la console prévu sur celle-ci et s'étendant à la verticale sur et le long de la portion de ligne de crête (117) de la console.

15. Structure de carrosserie de véhicule avant selon la revendication 14, qui comporte en outre des plaquettes de séparation gauche et droite (26) supportées chacune par une console correspondante des consoles d'aile gauche et droite (23) pour séparer une surface intérieure de l'aile latérale (27) correspondante,
dans laquelle chacune des ailes latérale (27) comporte une carrosserie d'aile (125) couvrant la console d'aile (23) correspondante depuis l'extérieur de la carrosserie de véhicule et ayant la plaquette de séparation gauche ou droite (26) prévue sur la surface intérieure (125a) de celui-ci, une section verticale (126) s'étendant vers le bas depuis une portion d'extrémité supérieure de la carrosserie d'aile (125), et une section de montage d'aile (127) saillant vers l'intérieur, dans le sens de la largeur du véhicule, depuis une portion d'extrémité inférieure de la section verticale (126), et
dans laquelle chacune des plaquettes de séparation gauche et droite (26) comporte une surface verticale (131) opposée à une surface extérieure de la section verticale (126) de l'aile latérale (27) correspondante, et un cordon de restriction (132) s'étendant à la verticale pour un engagement par ajustement avec le cordon (118) de la console de la console d'aile (23) correspondante.
